# EUROPÄISCHE PATENTANMELDUNG

(11) **EP 4 446 961 A1**
(43) Veröffentlichungstag der Anmeldung: **16.10.2024**
(21) Anmeldenummer: 23168066.1
(22) Anmeldetag: 14.04.2023
(51) Int. Cl.: G06Q 10/08, G06Q 50/28

(54) **VERFAHREN ZUM VERWALTEN EINES LAGERSYSTEM, EINES WARENSYSTEMS UND/ODER EINES PRODUKTIONSSYSTEMS, UND SYSTEM**

(71) Anmelder: Ekko GmbH, 58456 Witten (DE)
(72) Erfinder: Falkewitz, Rouven, 58455 Witten (DE); LEHMANN, Benny Philip, 58456 Witten (DE)
(74) Vertreter: Angerhausen, Christoph

(57) **Zusammenfassung**

Die Erfindung betrifft ein Verfahren zum Verwalten eines Lagersystem, eines Warensystems und/oder eines Produktionssystems, umfassend die Schritte: Erfassen von in einer Kennung (2) hinterlegten Informationen mit einem mobilen Datenerfassungsgerät (3); Übermitteln der Informationen an ein mit dem mobilen Datenerfassungsgerät (3) zum Datenaustausch verbundenes Verwaltungssystem (1); Identifizieren, anhand der übermittelten Informationen, mindestens eines Objekts (4) einer Mehrzahl Objekte durch das Verwaltungssystem (1), wobei jedem Objekt (4) eine eindeutige Industriekoordinate (5) eines Industriekoordinatensystem (6) zugeordnet ist; Erstellen einer Anweisung in Abhängigkeit des identifizierten Objekts (4), dessen Industriekoordinaten (5) und/oder der übermittelten Informationen, und übermitteln der Anweisung von dem Verwaltungssystem (1) an das mobile Datenerfassungsgerät (3), das identifizierte Objekt (4) und/oder an ein externes Gerät; wobei die Industriekoordinaten (5) mindestens eine Hierarchieebene (8) umfassen und mindestens eine, mehrere oder alle Hierarchieebenen (8) einer physikalischen Eigenschaft des der jeweiligen Industriekoordinate (5) zugeordneten Objekts (4) entsprechen. Die Erfindung betrifft zudem ein entsprechendes System (100).

## Beschreibung

Die Erfindung betrifft ein Verfahren zum Verwalten eines Lagersystem, eines Warensystems und/oder eines Produktionssystems. Die Erfindung betrifft weiter ein System, das ein entsprechendes Verwaltungssystem aufweist.

Lagersysteme, Warensysteme und Produktionssysteme umfassen in der Regel die Verwaltung von Waren oder Produkten. Dabei wird üblicherweise die Anzahl und/oder Position, wie z.B. ein Lagerort, der Waren bzw. Produkte erfasst oder bestimmt, um beispielsweise geringere Lagerbestände vorhalten zu müssen oder um eine bessere Fertigungstaktung zu erreichen.

Insbesondere ist eine geringe Fehlerzahl erstrebenswert, um Kosten einzusparen oder Fertigungsausfälle zu vermeiden oder zumindest zu reduzieren. Dazu müssen Waren oder Produkte einfach, schnell und unkompliziert durch das entsprechende Verwaltungssystem, aber auch durch menschliche Bediener oder Benutzer, z.B. Arbeiter oder Bedienpersonal, verwaltet, identifiziert oder zugeordnet werden können. Zudem sollten falsche oder fehlerhafte Zuordnungen leicht erkennbar sein.

Die vorliegende Erfindung löst diese Aufgabe durch ein Verfahren nach Anspruch 1 und ein System nach Anspruch 13. Die Unteransprüche betreffen jeweils vorteilhafte Ausführungsformen.

Ein erster Aspekt betrifft ein Verfahren zum Verwalten eines Lagersystem, eines Warensystems und/oder eines Produktionssystems, umfassend die Schritte:
- Erfassen einer Kennung mit einem mobilen Datenerfassungsgerät, wobei das mobile Datenerfassungsgerät in der Kennung hinterlegte Informationen erfasst;
- Übermitteln der Informationen an ein mit dem mobilen Datenerfassungsgerät zum Datenaustausch verbundenes Verwaltungssystem;
- Identifizieren mindestens eines Objekts einer Mehrzahl Objekte durch das Verwaltungssystem, wobei jedem Objekt eine eindeutige Industriekoordinate eines Industriekoordinatensystem zugeordnet ist und bei dem Identifizieren die eindeutigen Industriekoordinaten des zu identifizierenden Objekts anhand der übermittelten Informationen bestimmt wird;
- Erstellen einer Anweisung in Abhängigkeit des identifizierten Objekts, dessen Industriekoordinaten und/oder der übermittelten Informationen, und übermitteln der Anweisung von dem Verwaltungssystem an das mobile Datenerfassungsgerät, das identifizierte Objekt und/oder an ein mit dem Verwaltungssystem zum Datenaustausch verbundenes externes Gerät;
wobei die Industriekoordinaten mindestens eine Hierarchieebene umfassen und mindestens eine, mehrere oder alle Hierarchieebenen einer physikalischen Eigenschaft des der jeweiligen Industriekoordinate zugeordneten Objekts entsprechen.

Es kann vorgesehen sein, dass das Industriekoordinatensystem die Industriekoordinaten in einer baumförmigen Struktur strukturiert. Das Industriekoordinatensystem und/oder die Industriekoordinaten können eine Baumstruktur haben. Die Industriekoordinaten können gruppiert sein, beispielsweise baumförmig.

Das Industriekoordinatensystem und/oder die Industriekoordinaten können einige, mehrere oder alle der nachfolgend beschriebenen technischen Effekte und/oder Vorteile aufweisen.

Dadurch, dass mindestens eine, mehrere oder alle Hierarchieebenen einer physikalischen Eigenschaft eines Objekts entsprechen, und/oder eine physikalische Eigenschaft repräsentieren und/oder abbilden, können Objekte einfach im Industriekoordinatensystem gruppiert und/oder verknüpft sein oder werden.

Zudem können die Objekte und die ihnen zugeordneten Industriekoordinaten einfach verifiziert sein oder werden, da die physikalischen Eigenschaften der (realen) Objekte leicht und einfach überprüfbar und mit den entsprechenden Hierarchieebenen und/oder den Industriekoordinaten, und/oder den Bestandteilen der Industriekoordinaten, verglichen werden können.

Es kann vorgesehen sein, dass die Industriekoordinaten und/oder deren Bestandteile können derart gewählt sein oder werden, dass sie für einen Menschen unmittelbar als die entsprechende physikalische Eigenschaft interpretierbar sein können. Damit kann die Vergleichbarkeit weiter erhöht werden. Eine entsprechende Benennung ist aber nicht zwingend notwendig; die den entsprechenden Hierarchieebenen und/oder den Industriekoordinaten, und/oder den Bestandteilen der Industriekoordinaten können auch dann physikalische Eigenschaften repräsentieren, selbst wenn sie nicht unmittelbar oder auf den ersten Blick durch einen Menschen entsprechend zugeordnet sein oder werden können. In einigen Ausführungsformen können beispielsweise Korrespondenzlisten, Äquivalenzlisten, Wörterbücher oder dergleichen vorgesehen sein.

Dadurch, dass mindestens eine, mehrere oder alle Hierarchieebenen einer physikalischen Eigenschaft eines Objekts entsprechen, und/oder eine physikalische Eigenschaft repräsentieren und/oder abbilden, und entsprechend die Objekte einfach im Industriekoordinatensystem gruppiert und/oder verknüpft sein oder werden können, können einfach und unkompliziert neue Industriekoordinaten eingefügt sein oder werden. Dadurch, dass das Industriekoordinatensystem eine baumförmige Struktur aufweist, können die Industriekoordinaten gruppiert und/oder verknüpft sein oder werden, und können einfach und unkompliziert neue Industriekoordinaten eingefügt sein oder werden. Durch die Gruppierung kann Speicherbedarf reduziert sein oder werden. Durch die Gruppierung kann eine Zugriffszeit und/oder Abrufzeit der Industriekoordinaten reduziert sein oder werden. Beispielsweise können gruppierte Industriekoordinaten nahe beieinander in einem Speicher hinterlegt sein oder werden.

Dadurch, dass mindestens eine, mehrere oder alle Hierarchieebenen einer physikalischen Eigenschaft eines Objekts entsprechen, und/oder eine physikalische Eigenschaft repräsentieren und/oder abbilden, kann ein Status des Systems, des Verwaltungssystems, und/oder der Waren und/oder Produkte, bereits durch das Industriekoordinatensystem bestimmt und/oder ermittelt sein oder werden. Insbesondere kann eine nachgelagerte Analyse oder Auswertung eines Status des Systems, des Verwaltungssystems, und/oder der Waren und/ oder Produkte, deutlich beschleunigt sein oder werden, oder sogar auf eine nachgelagerte Analyse oder Auswertung verzichtet sein oder werden. Es kann vorgesehen sein, dass das Industriekoordinatensystem bereits für sich den Status abbildet und/oder repräsentiert.

Es kann vorgesehen sein, dass mindestens eine Industriekoordinate laufend, turnusmäßig und/oder periodisch überwacht, geprüft und/oder verifiziert ist oder wird. Es kann vorgesehen sein, dass mindestens eine Industriekoordinate laufend, turnusmäßig und/oder periodisch aktualisiert ist oder wird. Durch das Aktualisieren kann beispielsweise der tatsächliche Zustand des Objekts mit dem durch die entsprechende Industriekoordinate abgebildeten und/oder repräsentierten in Übereinstimmung oder Einklang gebracht sein oder werden.

Eine Industriekoordinate kann aus mehreren Bestandteilen bestehen und/oder mehrere Bestandteile aufweisen. Eine Industriekoordinate kann einen Bestandteil je Hierarchieebene aufweisen. Es kann vorgesehen sein, dass eine Industriekoordinate einen Bestandteil in einer Hierarchieebene aufweist, und eine andere Industriekoordinate keinen Bestandteil in dieser Hierarchieebene aufweist. Es kann vorgesehen sein, dass mindestens zwei Industriekoordinaten mindestens eine verschiedene Hierarchieebene aufweisen und/oder umfassen.

Das Industriekoordinatensystem kann die Hierarchieebenen aufweisen, und/oder definieren oder strukturieren. Es kann auch vorgesehen sein, dass das Industriekoordinatensystem eine Anzahl Hierarchieebenen aufweist, und mindestens eine Industriekoordinate eine Anzahl Bestandteile kleiner der Anzahl Hierarchieebenen des Industriekoordinatensystems umfasst oder aus solchen besteht. In anderen Worten muss nicht zwingend eine Industriekoordinate einen Bestandteil für jede Hierarchieebene des Industriekoordinatensystems haben oder umfassen. Weist eine Industriekoordinate einen Bestandteil in einer Hierarchieebene auf, und/oder einen einer Hierarchieebene zugeordneten Bestandteil auf, so kann die Industriekoordinate die entsprechende Hierarchieebene umfassen.

Eine, mehrere oder alle Industriekoordinaten können ein alphanumerischer String und/oder eine alphanumerische Zeichenkette sein oder aufweisen.

Dadurch, dass die Kennung durch das mobile Datenerfassungsgerät erfasst ist oder wird, kann das Verfahren flexibel und einfach durchgeführt werden, beispielsweise von einem Bediener und/oder Benutzer. Der Bediener und/oder Benutzer kann ein Arbeiter oder Bedienpersonal sein.

Es kann vorgesehen sein, dass das Verwaltungssystem Zugriffsrechte und/oder Benutzerrechte verwalten kann. Beispielsweise kann ein Benutzer und/oder Bediener einen Benutzerzugang und/oder einen Account haben, mit dem er auf das Verwaltungssystem zugreifen kann. Es kann beispielsweise vorgesehen sein, dass eine, mehrere oder alle Industriekoordinaten mindestens einem, mehreren oder allen Benutzern nicht zugänglich sind, und/oder von dem Benutzer nicht gelesen, geändert, gelöscht, manipuliert sein oder werden können. Beispielsweise kann ein bestimmter Benutzer nur Zugang zu oder Zugriff auf für ihn freigeschalteten, und/oder seinen Benutzerrechten entsprechend zugeordneten Industriekoordinaten haben.

Ebenso kann vorgesehen sein, dass mit dem Verwaltungssystem zum Datenaustausch verbundene Maschinen, Computer, Fertigungswerkzeuge oder dergleichen nur Zugriff auf jeweils freigeschaltete Industriekoordinaten haben. Es kann vorgesehen sein, dass Zugriffsrechte für mit dem Verwaltungssystem zum Datenaustausch verbundene Maschinen, Computer, Fertigungswerkzeuge oder dergleichen eingerichtet sind. Mit dem Verwaltungssystem zum Datenaustausch verbundene Maschinen, Computer, Fertigungswerkzeuge oder dergleichen können einen Benutzerzugang und/oder Account haben.

Das Verwaltungssystem bzw. das Industriekoordinatensystem kann damit insbesondere auch die Verwaltung von Benutzerrechten und Rollen für Menschen als auch Maschinen ermöglichen. Die entsprechenden Rechte und Rollen können beispielsweise auf Basis generierter Daten (z.B. Scans), Analysen, und/oder Machine-Learning Prozessen verteilt, eingerichtet und/oder geändert sein oder werden. Die entsprechenden Rechte und Rollen können beispielsweise auf der Industriekoordinaten verteilt, eingerichtet und/oder geändert sein oder werden.

In einigen Ausführungsformen kann vorgesehen sein, anhand und/oder auf Basis von Industriekoordinaten, generierter Daten (z.B. Scans), Analysen, und/oder Machine-Learning Prozessen z.B. Laufwege, z.B. von Benutzern, Arbeiter wie Lagerarbeiter, oder sonstigem Personal, und/oder Prozesse und/oder Lager, z.B. Lagerhaltung, Inventarisierung, Taktzeiten, Durchlaufzeiten, Arbeitsabläufe, eine Reihenfolge von Bearbeitungsschritten oder dergleichen, zu optimieren.

In einigen Ausführungsformen kann dazu das Industriekoordinatensystem und/oder die Industriekoordinaten analysiert und/oder ausgewertet werden, beispielsweise mittels machine learning.

Mindestens ein Objekt kann eine Ware, ein Produkt, ein Ausgangsstoff, ein Zwischenprodukt, ein Endprodukt, ein Bauteil, ein Halbzeug, oder dergleichen sein oder aufweisen. Alternativ oder zusätzlich kann mindestens ein Objekt ein Fach, ein Behälter, ein Container, ein Regal, ein Brett, ein Tisch, oder dergleichen sein oder aufweisen, z.B. zur Lagerung einer Ware oder eines Produkts. Alternativ oder zusätzlich kann mindestens ein Objekt eine Maschine, eine Fertigungsmaschine, eine Werkzeugmaschine, eine Produktionsanlage, ein Fertigungszeug, ein Werkzeug, ein Transportmittel oder eine Transporteinheit, oder dergleichen sein oder aufweisen. Alternativ oder zusätzlich kann mindestens ein Objekt ein elektronisches Etikett sein oder aufweisen.

Alternativ oder zusätzlich kann das Objekt ein Tablet sein oder aufweisen. Es kann in einigen Ausführungsformen z.B. vorgesehen sein, dass das Objekt ein Tablet oder dergleichen sein oder aufweisen kann, und die übermittelte Anweisung eine Anweisung oder Instruktion an einen Benutzer und/oder Bediener umfassen kann. Beispielsweise kann ein Picker über das Tablet angewiesen und/oder instruiert werden, einen oder mehrere bestimmte Gegenstände zu entnehmen, zu transportieren und/oder einzulagern. Beispielsweise kann ein Arbeiter über das Tablet angewiesen und/oder instruiert werden, einen oder mehrere bestimmte Arbeitsschritte und/oder Fertigungsschritte durchzuführen. Es kann vorgesehen sein, dass das Objekt mit dem mobilen Datenerfassungsgerät identisch sein kann, und/oder dem mobilen Datenerfassungsgerät entsprechen kann.

In einigen Ausführungsformen kann ein Auftrag, eine Arbeitsanweisung oder dergleichen an einen Benutzer, z.B. einen Picker, Arbeit, Lagerarbeiter oder dergleichen, derart übermittelt werden, dass der Auftrag an das mobile Datenerfassungsgerät oder ein Mobilgerät des Benutzers, z.B. ein oder das Tablet, übermittelt werden kann. Der Benutzer kann dann den Auftrag ausführen, beispielsweise unter Durchführung eines oben beschriebenen Verfahrens. Alternativ oder zusätzlich kann ein Auftrag, eine Anweisung oder dergleichen von dem Benutzer gestartet und/oder initiiert werden, beispielsweise unter Durchführung eines oben beschriebenen Verfahrens, und/oder indem der Benutzer einen Auftragszettel, Laufzettel, Anweisung oder dergleichen mit einem Mobilgerät und/oder dem mobilen Datenerfassungsgerät erfasst und/oder scannt.

Das System kann ein Lagersystem, ein Warensystems und/oder ein Produktionssystem sein oder aufweisen.

Physikalische Eigenschaften können messbar und/oder bestimmbar sein. Beispielsweise kann eine Abmessung oder Dimension eines Objekts eine physikalische Eigenschaft sein. Beispielsweise kann ein Material, aus dem ein Objekt besteht oder welches es aufweist, eine physikalische Eigenschaft sein. Beispielsweise kann ein Zustand eines Objekts eine physikalische Eigenschaft sein. Beispielsweise kann ein Betriebsmodus eines Objekts eine physikalische Eigenschaft sein. Beispielsweise kann eine Position und/oder ein Ort eine physikalische Eigenschaft sein. Beispielsweise kann eine Temperatur, ein Druck und/oder ein Aggregatzustand eine physikalische Eigenschaft sein. Beispielsweise kann eine Menge und/oder eine Anzahl eine physikalische Eigenschaft sein. Diese Liste ist nicht abschließend, je nach Art oder Typ des Objekts sind andere, mehrere, wenigere oder weitere physikalische Eigenschaften möglich.

Beispielsweise kann eine, mehrere oder alle Hierarchieebenen einem oder mehrere aus Aufstellungsort, Lagerort, Betriebsmodus, Takts, Maschinentyps, Erzeugnis (z.B. Typ, Art, Zustand, etc.) und/oder Herstellungsinformationen des der jeweiligen Industriekoordinate zugeordneten Objekts entsprechen.

Die erfassten und/oder übermittelten Informationen können geeignet sein, ein oder das Objekt zu identifizieren, und/oder die von dem Verwaltungssystem zu erstellende Anweisung zu definieren oder zumindest bei deren Erstellung berücksichtig zu werden. Beispielsweise können die erfassten und/oder übermittelten Informationen eine oder mehrere Industriekoordinaten umfassen, oder aus einer oder mehreren Industriekoordinaten bestehen. Beispielsweise können die erfassten und/oder übermittelten Informationen eine oder mehrere Anweisungen, Steuerbefehle und/oder Mitteilungen umfassen, die das Verwaltungssystem bei dem Identifizieren und/oder bei dem Erstellen der Anweisung berücksichtigen und/oder verwenden kann.

Beispielsweise können die übermittelten Informationen zumindest teilweise mit den jeweiligen Objekten eindeutig zugeordneten Industriekoordinaten des Industriekoordinatensystems abgeglichen werden, z.B. bei dem Identifizieren.

Die von dem Verwaltungssystem erstellte Anweisung kann dazu dienen, eine Rückmeldung und/oder eine Reaktion auf das Erfassen der Kennung zu erzeugen. Die Art und Weise der Rückmeldung und/oder Reaktion kann von dem Verfahren, der Kennung, der erfassten und/oder übermittelten Informationen, dem identifizierten Objekt oder dergleichen abhängen.

In einigen Ausführungsformen kann eine Anweisung ein Befehl, ein Steuerbefehl, ein Maschinenbefehl, ein Programmierbefehl, eine Instruktion, eine Programminstruktion und/oder eine Computerinstruktion oder dergleichen sein oder aufweisen. In einigen Ausführungsformen kann eine Anweisung Daten, Nachrichtungen, Mitteilungen oder dergleichen umfassen und/oder enthalten, die z.B. zum Ausführen der Anweisung dienen können, und/oder mit denen z.B. die Anweisung ausgeführt und/oder umgesetzt werden kann.

Es kann vorgesehen sein, dass das mobile Datenerfassungsgerät, das identifizierte Objekt und/oder das externe Gerät nach Erhalt der Anweisung die Anweisung und/oder eine durch die Anweisung vorgegebene Aktion ausführen kann.

Das externe Gerät kann beispielsweise eine Computereinheit sein oder aufweisen. Das externe Gerät kann z.B. ein Desktop-PC, ein Laptop, ein Tablet, ein Smartphone, ein Mobilgerät, ein Server oder dergleichen sein oder aufweisen. Alternativ oder zusätzlich kann das externe Gerät eine Maschine, z.B. eine Fertigungsmaschine, eine Werkzugmaschine, eine Produktionsmaschine, eine Produktionsanalage, eine Transporteinheit und/oder ein Transportgerät, oder dergleichen sein oder aufweisen.

Die Kennung kann von einem Handscanner erfasst sein und/oder werden. Alternativ oder zusätzlich kann die Kennung von einem Funktionshandschuh erfasst sein und/oder werden.

Bei dem Übermitteln der Informationen können Hilfsinformationen übermittelt werden. Die Hilfsinformationen können beispielsweise einen Standort oder eine Position umfassen. Es kann vorgesehen sein, dass die Hilfsinformationen alternativ oder zusätzlich eine oder mehrere physikalische Eigenschaften des zu identifizierenden Objekts umfassen können. Beim Identifizieren des Objekts kann das Identifizieren unter Berücksichtigung der Hilfsinformationen erfolgen. Beim Identifizieren und/oder Abgleichen kann das Abgleichen unter Berücksichtigung der Hilfsinformationen erfolgen. Dadurch, dass die Industriekoordinaten gruppiert sein können, kann die Hilfsinformation z.B. einen Anhaltspunkt bezüglich derjenigen Gruppe geben, der die Industriekoordinate des zu identifizierenden Objekts zugehörig sein kann.

Das Verfahren kann zur Kommissionierung von Waren und/oder Bauteilen mittels Pick-by-Light einsetzbar sein und/oder verwendet werden.

Beim Erfassen der Kennung kann ein Auftragsschein erfasst sein und/oder werden. Es kann vorgesehen sein, dass der Auftragsschein gescannt sein oder werden kann. Der Auftragsschein kann eine oder mehrere zu kommissionierende Waren umfassen. In einigen Ausführungsformen kann jeweils eine Industriekoordinate der jeweiligen zu kommissionierenden Ware und/oder jeweils eine Industriekoordinate eines jeweiligen, der zu kommissionierenden Ware zugeordneten elektronischen Etiketts, erfasst sein und/oder werden. Bei dem Identifizieren kann ein an oder bei den zu kommissionierenden Waren angeordnetes elektronisches Etikett als zu identifizierendes Objekt identifiziert werden. Beim Erstellen der Anweisung kann eine Anweisung, die das identifizierte elektronische Etikett anweisen kann, zu leuchten und/oder zu blinken, erstellt werden. Die Anweisung kann an das identifizierte elektronische Etikette übermittelt sein und/oder werden. Das identifizierte elektronische Etikett kann nach dem Übermitteln leuchten und/oder blinken.

Das elektronische Etikett kann eine oder mehrere Leuchtmittel, z.B. LEDs aufweisen. Das elektronische Etikett kann dazu eingerichtet sein, in verschiedenen Farben zu blinken und/oder zu leuchten. Es kann vorgesehen sein, dass Farbe und/oder Frequenz variiert, gewählt und/oder vorgegeben sein kann. Beispielsweise kann die Farbe und/oder die Frequenz in Abhängigkeit von der Industriekoordinate, dem identifizierten Objekt und/oder z.B. einem Ort, beispielsweise ein Behälter, Fach, ein Lagerregal, ein oder dergleichen, aus dem ein Objekt entnommen sein oder werden soll, dem Benutzer, z.B. Benutzeraccount oder dergleichen, einem zu pickenden Objekt oder dergleichen gewählt und/oder vorgegeben sein oder werden. In einigen Ausführungsformen kann die vorgegebene Farbe und/oder Frequenz Teil der Anweisung sein. In einigen Ausführungsformen kann die Farbe und/oder Frequenz derart gewählt, vorgegeben und/oder variiert sein oder werden, dass einem Benutzer, z.B. einem Picker und/oder Lagerarbeiter, Anweisungen, Befehle und/oder Informationen übermittelt werden können, die z.B. auf der Farbe und/oder Frequenz basieren und/oder diesen entsprechen können. In einigen Ausführungsformen kann vorgesehen sein, dass mindestens einem, mehreren oder allen Benutzern, z.B. Pickern und/oder Lagerarbeitern, und/oder Benutzeraccounts eine bestimmte Farbe und/oder Frequenz zugeordnet sein kann. Die Farbe und/oder Frequenz kann benutzerspezifisch, z.B. pickerspezifisch, sein.

Das Verfahren kann zur Lagerung mittels Put-to-Light einsetzbar sein, und/oder verwendet werden. Mindestens eine Industriekoordinate kann dem Industriekoordinatensystem zugeordnet sein oder werden.

Es kann eine Teilekennung einer zu lagernden Ware erfasst sein und/oder werden. In einigen Ausführungsformen kann eine an oder bei der zu lagernden Ware angeordnete Teilekennung erfasst sein und/oder werden. Die Teilekennung kann mit einem oder dem mobilen Datenerfassungsgerät erfasst sein und/oder werden, wobei Teileidentifizierungsdaten der Teilekennung erfasst werden können. Die Teileidentifizierungsdaten können an das mit dem mobilen Datenerfassungsgerät zum Datenaustausch verbundene Verwaltungssystem übermittelt sein und/oder werden. Ein elektronisches Etikett kann mit dem mobilen Datenerfassungsgerät erfasst sein und/oder werden, wobei Etikettidentifizierungsdaten des elektronischen Etiketts erfasst werden können. Die Etikettidentifizierungsdaten können an das mit dem mobilen Datenerfassungsgerät zum Datenaustausch verbundene Verwaltungssystem übermittelt sein und/oder werden. Eine Industriekoordinate, die dem elektronischen Etikett und/oder der Ware zugeordnet sein kann, kann von und/oder mit dem Verwaltungssystem erstellt sein und/oder werden. Nach dem Erstellen der Industriekoordinate kann eine Anweisung von dem Verwaltungssystem an das elektronische Etikett übermittelt werden. Die Anweisung kann das elektronische Etikett anweisen, zu leuchten und/oder zu blinken. Nach dem Übermitteln der Anweisung kann das elektronische Etikett leuchten und/oder blinken.

Das elektronische Etikett kann eine oder mehrere Leuchtmittel, z.B. LEDs aufweisen. Das elektronische Etikett kann dazu eingerichtet sein, in verschiedenen Farben zu blinken und/oder zu leuchten. Es kann vorgesehen sein, dass Farbe und/oder Frequenz variiert, gewählt und/oder vorgegeben sein kann. Beispielsweise kann die Farbe und/oder die Frequenz in Abhängigkeit von der Industriekoordinate, dem identifizierten Objekt und/oder z.B. einem Ort, beispielsweise ein Behälter, Fach, ein Lagerregal, ein oder dergleichen, an dem ein Objekt abgelegt und/oder gelagert sein oder werden soll, dem Benutzer, z.B. Benutzeraccount oder dergleichen, einem abzulegenden Objekt oder dergleichen gewählt und/oder vorgegeben sein oder werden. In einigen Ausführungsformen kann die vorgegebene Farbe und/oder Frequenz Teil der Anweisung sein. In einigen Ausführungsformen kann die Farbe und/oder Frequenz derart gewählt, vorgegeben und/oder variiert sein oder werden, dass einem Benutzer, z.B. einem Picker und/oder Lagerarbeiter, Anweisungen, Befehle und/oder Informationen übermittelt werden können, die z.B. auf der Farbe und/oder Frequenz basieren und/oder diesen entsprechen können. In einigen Ausführungsformen kann vorgesehen sein, dass mindestens einem, mehreren oder allen Benutzern, z.B. Pickern und/oder Lagerarbeitern, und/oder Benutzeraccounts eine bestimmte Farbe und/oder Frequenz zugeordnet sein kann. Die Farbe und/oder Frequenz kann benutzerspezifisch sein.

Die Etikettidentifizierungsdaten können dazu dienen, ein elektronisches Etikett zu identifizieren und/oder zu ermitteln. Es kann auch vorgesehen sein, dass die Etikettidentifizierungsdaten dazu dienen kann, eine Industriekoordinate für ein oder das elektronische Etikett zu erstellen und/oder dem Industriekoordinatensystem hinzuzufügen, und/oder dem elektronischen Etikett eine Industriekoordinate zuzuordnen. Beispielsweise können die Etikettidentifizierungsdaten eine Industriekoordinate eines elektronischen Etiketts aufweisen. Alternativ oder zusätzlich können die Etikettidentifizierungsdaten eine Mitteilung, Anweisung und/oder Steuerbefehl umfassen, anhand der oder dem das Verwaltungssystem ein oder das elektronische Etikett identifizieren und/oder ermitteln kann, eine Industriekoordinate für das elektronische Etikett anlegen, erstellen und/oder dem Industriekoordinatensystem hinzufügen kann, und/oder anhand der oder dem das Verwaltungssystem eine oder die Anweisung erstellen kann.

Die Teilekennung und/oder die Teileidentifizierungsdaten können dazu dienen, die Ware zu identifizieren und/oder zu ermitteln. Es kann auch vorgesehen sein, dass die Teilekennung und/oder die Teileidentifizierungsdaten dazu dienen können, eine Industriekoordinate für die Ware zu erstellen und/oder dem Industriekoordinatensystem hinzuzufügen, und/oder der Ware eine Industriekoordinate zuzuordnen. Beispielsweise können die Teilekennung und/oder die Teileidentifizierungsdaten eine Industriekoordinate einer oder der Ware aufweisen. Alternativ oder zusätzlich kann Teilekennung und/oder die Teileidentifizierungsdaten eine oder mehrere physikalische Eigenschaften der Ware umfassen. Alternativ oder zusätzlich kann Teilekennung und/oder die Teileidentifizierungsdaten eine Mitteilung, Anweisung und/oder Steuerbefehl umfassen, anhand der oder dem das Verwaltungssystem die Ware identifizieren und/oder ermitteln kann, eine Industriekoordinate für die Ware anlegen, erstellen und/oder dem Industriekoordinatensystem hinzufügen kann, und/oder anhand der oder dem das Verwaltungssystem eine oder die Anweisung erstellen kann.

Die zu lagernde Ware kann ein Bauteil, ein Produkt, ein Ausgangsstoff, ein Ausgangsprodukt, ein Zwischenprodukt, ein Fertigprodukt, ein Fertigteil, ein Halbzeug, oder dergleichen sein oder aufweisen.

Das Verwaltungssystem kann die Ware mit dem elektronischen Etikett verknüpfen und/oder einander zuordnen. Das Verwaltungssystem kann die jeweiligen Industriekoordinaten verknüpfen und/oder einander zuordnen.

Das elektronische Etikett kann an der Ware befestigt sein und/oder werden. Es kann vorgesehen sein, dass das Befestigen und oder anbringen des elektronischen Etiketts nach dem Zuordnen und/oder Verknüpfen an der Ware befestigt und/oder angebracht wird.

Das elektronische Etikett kann gescannt werden, und das mobile Datenerfassungsgerät kann eine Quittierung an das Verwaltungssystem übermitteln. Das Einlagern der Ware kann quittiert sein oder werden.

Das Verwaltungssystem kann nach dem Übermitteln der Quittierung eine mit der Quittierung verknüpfte Industriekoordinate ändern oder löschen, und/oder eine Industriekoordinate neu anlegen und mit der Quittierung verknüpfen. Damit kann der Zustand und/oder Status des Systems, des Verwaltungssystems, und/oder der Waren und/oder Produkte, aktualisiert sein oder werden.

Beim Erfassen der Kennung kann das mobile Datenerfassungsgerät die Identifizierungsdaten drahtlos erfassen. Es kann vorgesehen sein, dass die Identifizierungsdaten durch das mobile Datenerfassungsgerät automatisch erfasst werden können, wenn ein Abstand zwischen Kennung und mobilem Datenerfassungsabstand geringer als ein Mindestabstand ist.

Das mobile Datenerfassungsgerät kann an einer Transporteinheit angeordnet, befestigt und/oder angebracht sein. Die Kennung kann an einem zu transportierenden Gegenstand angeordnet, befestigt und/oder angebracht sein. Das Erstellen der Anweisung kann ein Ermitteln eines Lagerorts, Abstellorts und/oder Zielorts des zu transportierenden Gegenstands umfassen.

Die dem zu transportierenden Gegenstand zugeordnete Industriekoordinate kann vor dem Erfassen der Kennung, dem Übermitteln der Informationen und/oder dem Bestimmen der Anweisung den Lagerort, Abstellort und/oder Zielort nicht umfasst sein, und/oder diese nicht aufweisen. Es kann vorgesehen sein, dass das Verwaltungssystem die mit dem Gegenstand verknüpfte Industriekoordinate nach dem Erfassen der Kennung und/oder dem Übermitteln der Informationen und/oder dem Bestimmen der Anweisung derart ändern kann, dass diese den Lagerort, Abstellort und/oder Zielort umfassen kann.

Lediglich beispielhaft kann eine Anweisung einen Benutzer und/oder Bediener anweisen, eine Handlung vorzunehmen, und/oder eine Handlungsanweisung und/oder Handlungsempfehlung an den Benutzer und/oder Bediener umfassen und/oder mitteilen. Lediglich beispielhaft kann eine Anweisung einen Steuerbefehl für eine Maschine umfassen. Diese Beispiele sind nicht abschließend.

Es kann vorgesehen sein, dass einer oder mehrere Schritte eines, mehrerer oder aller vorstehend beschriebenen Verfahren in verschiedener und/oder abweichender Reihenfolge durchgeführt werden.

Einer, mehrere oder alle Schritte eines, mehrerer oder aller vorstehend beschriebenen Verfahren können computer-implementiert sein.

Ein weiterer Aspekt betrifft ein System, umfassend ein mobiles Datenerfassungsgerät, ein Verwaltungssystem, und eine Mehrzahl Objekte, wobei jedem Objekt eine Industriekoordinate zugeordnet ist, die mit einem Industriekoordinatensystem strukturiert sind, wobei die Industriekoordinaten mindestens eine Hierarchieebene umfassen und mindestens eine, mehrere oder alle Hierarchieebenen einer physikalischen Eigenschaft, bevorzugt eines Aufstellungsorts, eines Lagerorts, eines Betriebsmodus, eines Takts, eines Maschinentyps, eines Erzeugnisses und/oder Herstellungsinformationen, des der jeweiligen Industriekoordinate zugeordneten Objekts entsprechen, wobei das System dazu eingerichtet ist, ein oder das vorstehend beschriebene Verfahren durchzuführen.

Mindestens zwei, mehrere oder alle der Industriekoordinaten können mindestens eine gemeinsame Hierarchieebene haben. Mindestens zwei, mehrere oder alle der Industriekoordinaten können mindestens eine verschiedene Hierarchieebene haben und/oder umfassen.

Mindestens zwei, mehrere oder alle der Industriekoordinaten können die gleiche Anzahl Hierarchieebenen haben. Mindestens zwei, mehrere oder alle der Industriekoordinaten können eine unterschiedliche Anzahl Hierarchieebenen haben und/oder umfassen.

Die Erfindung wird anhand der nachfolgenden Figuren weiter erläutert. Es zeigen:
- Fig. 1:: eine beispielhafte Ausführungsform eines erfindungsgemäßen Verwaltungssystems;
- Fig. 2:: eine beispielhafte Ausführungsform eines Industriekoordinatensystems;
- Fig. 3:: eine andere beispielhafte Ausführungsform eines Industriekoordinatensystems;
- Fig. 4:: eine weitere beispielhafte Ausführungsform eines Industriekoordinatensystems;
- Fig. 5:: eine noch weitere beispielhafte Ausführungsform eines Industriekoordinatensystems;
- Fig. 6:: eine beispielhafte Ausführungsform eines mobilen Datenerfassungsgeräts und einer Kennung;
- Fig. 7:: eine andere beispielhafte Ausführungsform eines mobilen Datenerfassungsgeräts und einer Kennung; und
- Fig. 8:: noch eine andere beispielhafte Ausführungsform eines mobilen Datenerfassungsgeräts und einer Kennung.

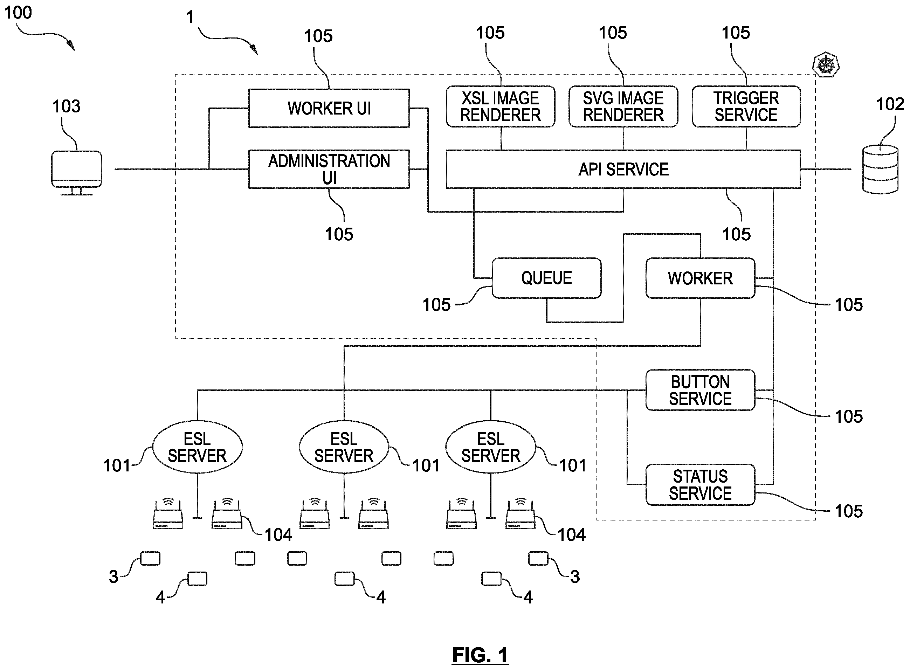

Figur 1 zeigt eine erfindungsgemäße Ausführungsform eines Systems 100. Das System 100 weist ein Verwaltungssystems 1 auf. Das System 100 weist ein oder mehrere mobile Datenerfassungsgeräte 3 und eines oder mehrere Objekte 4 auf. Das System 100 und/oder das Verwaltungssystem 1 kann einen oder mehrere Server 101 aufweisen. Alternativ oder zusätzlich kann das Verwaltungssystem 1 mit einem oder mehreren Servern 101 zum Datenaustausch verbunden sein. Das System 100 und/oder das Verwaltungssystem 1 kann eine Datenbank 102 aufweisen. Alternativ oder zusätzlich kann das Verwaltungssystem 1 mit einer Datenbank 102 zum Datenaustausch verbunden sein. Das System 100 und/oder das Verwaltungssystem 1 kann ein oder mehr externe Gerät 103 aufweisen. Alternativ oder zusätzlich kann das Verwaltungssystem 1 mit einem oder mehreren externen Geräten 103 zum Datenaustausch verbunden sein. Das System 100 und/oder das Verwaltungssystem 1 kann eine oder mehrere Kommunikationseinheiten 104 aufweisen. Alternativ oder zusätzlich kann das Verwaltungssystem 1 mit einer oder mehreren Kommunikationseinheiten 104 zum Datenaustausch verbunden sein.

Das Verwaltungssystem 1 kann eine oder mehrere Komponenten 105 aufweisen. Eine oder die Komponente 105 kann eine Softwarekomponente und/oder ein Softwarepaket umfassen. Beispielsweise kann eine Komponente eine Benutzeroberfläche, z.B. ein GUI, ein worker UI, ein administration UI, ein API, ein API Service, ein Grafik- oder Bildrenderer, z.B. ein XSL image renderer und/oder ein SVG image renderer, eine queue, ein trigger service, ein worker, ein button service und/oder ein status service sein und/oder aufweisen.

Das Verwaltungssystem 1 kann eine oder mehrere Computereinheiten aufweisen. Das Verwaltungssystem 1 kann cloud-basiert sein. Alternativ oder zusätzlich kann das Verwaltungssystem 1 on-premise und/oder lokal eingerichtet sein. Ein oder das erfindungsgemäße Verfahren kann zumindest teilweise computer-implementiert sein.

Es kann vorgesehen sein, dass das Verwaltungssystem 1 Zugriffsrechte und/oder Benutzerrechte verwalten kann. Beispielsweise kann ein Benutzer und/oder Bediener einen Benutzerzugang und/oder einen Account haben, mit dem er auf das Verwaltungssystem 1 zugreifen kann. Es kann beispielsweise vorgesehen sein, dass eine, mehrere oder alle Industriekoordinaten 5 mindestens einem, mehreren oder allen Benutzern nicht zugänglich sind, und/oder von dem Benutzer nicht gelesen, geändert, gelöscht, manipuliert sein oder werden können. Beispielsweise kann ein bestimmter Benutzer nur Zugang zu oder Zugriff auf für ihn freigeschalteten, und/oder seinen Benutzerrechten entsprechend zugeordneten Industriekoordinaten 5 haben.

Ebenso kann vorgesehen sein, dass mit dem Verwaltungssystem 1 zum Datenaustausch verbundene Maschinen, Computer, Fertigungswerkzeuge oder dergleichen nur Zugriff auf jeweils freigeschaltete Industriekoordinaten haben. Es kann vorgesehen sein, dass Zugriffsrechte für mit dem Verwaltungssystem 1 zum Datenaustausch verbundene Maschinen, Computer, Fertigungswerkzeuge oder dergleichen eingerichtet sind. Mit dem Verwaltungssystem 1 zum Datenaustausch verbundene Maschinen, Computer, Fertigungswerkzeuge oder dergleichen können einen Benutzerzugang und/oder Account haben.

Das Verwaltungssystem 1 und/oder das Industriekoordinatensystem 6 kann damit insbesondere auch die Verwaltung von Benutzerrechten und Rollen für Menschen als auch Maschinen ermöglichen. Die entsprechenden Rechte und Rollen können beispielsweise auf Basis generierter Daten (z.B. Scans), Analysen, und/oder machine learning Prozessen verteilt, eingerichtet und/oder geändert sein oder werden. Die entsprechenden Rechte und Rollen können beispielsweise auf der Industriekoordinaten 5 verteilt, eingerichtet und/oder geändert sein oder werden.

In einigen Ausführungsformen kann vorgesehen sein, anhand und/oder auf Basis von Industriekoordinaten 5, generierter Daten (z.B. Scans), Analysen, und/oder machine learning Prozessen z.B. Laufwege, z.B. von Benutzern, Arbeiter wie Lagerarbeiter, oder sonstigem Personal, und/oder Prozesse und/oder Lager, z.B. Lagerhaltung, Inventarisierung, Taktzeiten, Durchlaufzeiten, Arbeitsabläufe, eine Reihenfolge von Bearbeitungsschritten oder dergleichen, zu optimieren.

In einigen Ausführungsformen kann dazu das Industriekoordinatensystem 6 und/oder die Industriekoordinaten 5 analysiert und/oder ausgewertet werden, beispielsweise mittels machine learning.

Die Kommunikationseinheit 104 kann dazu eingerichtet sein, Daten mit einem oder mehreren mobilen Datenerfassungsgerät 3, und/oder einem oder mehreren Objekten 4, auszutauschen. Die Kommunikationseinheit 104 kann Mitteilungen, Steuerbefehle, Nachrichten, Anweisungen und/oder Informationen von einem mobilen Datenerfassungsgerät 3 und/oder einem Objekt 4 empfangen, und/oder an diese kommunizieren.

Mindestens ein Objekt 4 kann eine Ware, ein Bauteil, ein Halbzeug, ein Zwischenprodukt, ein Endprodukt, ein Ausgangsstoff oder dergleichen sein oder aufweisen. Alternativ oder zusätzlich kann mindestens ein Objekt 4 eine Maschine, Fertigungsvorrichtung, Transporteinheit oder dergleichen sein oder aufweisen. Alternativ oder zusätzlich kann mindestens ein Objekt 4 ein elektronisches Etikett 7 sein oder aufweisen.

Alternativ oder zusätzlich kann das Objekt 4 ein Tablet, ein Mobilgerät, ein Laptop, ein Smartphone oder dergleichen sein oder aufweisen. Es kann in einigen Ausführungsformen z.B. vorgesehen sein, dass das Objekt ein Tablet ein Mobilgerät, ein Laptop, ein Smartphone oder dergleichen oder dergleichen sein oder aufweisen kann, und die übermittelte Anweisung eine Anweisung oder Instruktion an einen Benutzer und/oder Bediener umfassen kann. Beispielsweise kann ein Picker über das Tablet angewiesen und/oder instruiert werden, einen oder mehrere bestimmte Gegenstände zu entnehmen, zu transportieren und/oder einzulagern. Beispielsweise kann ein Arbeiter über das Tablet angewiesen und/oder instruiert werden, einen oder mehrere bestimmte Arbeitsschritte und/oder Fertigungsschritte durchzuführen. Es kann vorgesehen sein, dass das Objekt 4 mit dem mobilen Datenerfassungsgerät 3 identisch sein kann, und/oder dem mobilen Datenerfassungsgerät 3 entsprechen kann.

Es kann vorgesehen sein, dass ein Auftrag, eine Arbeitsanweisung oder dergleichen an einen Benutzer, z.B. einen Picker, Arbeit, Lagerarbeiter oder dergleichen, derart übermittelt werden, dass der Auftrag an das mobile Datenerfassungsgerät 3 oder ein Mobilgerät des Benutzers, z.B. ein oder das Tablet, übermittelt werden kann. Beispielsweise kann der Auftrag und/oder die Arbeitsanweisung von dem Verwaltungssystem 1 erstellt, verwaltet und/oder an das mobile Datenerfassungsgerät 3 oder das Mobilgerät übermittelt sein oder werden. Der Benutzer kann dann den Auftrag ausführen, beispielsweise unter Durchführung eines erfindungsgemäßen Verfahrens. Alternativ oder zusätzlich kann ein Auftrag, eine Arbeitsanweisung oder dergleichen, von dem Benutzer gestartet und/oder initiiert werden, beispielsweise unter Durchführung eines erfindungsgemäßen Verfahrens. Es kann vorgesehen sein, dass der Benutzer einen Auftragszettel, Laufzettel, Anweisung oder dergleichen mit einem Mobilgerät und/oder dem mobilen Datenerfassungsgerät 3 erfasst und/oder scannt. Der Auftrag und/oder die Arbeitsanweisung kann dem Benutzer angezeigt sein oder werden, z.B. nach dem Erfassen und/oder Scannen.

Der Auftrag und/oder die Arbeitsanweisung kann beispielsweise eine Arbeitsanweisung zur Kommissionierung einer oder mehrerer Waren und/oder Objekte, z.B: Pick-to-Light und/oder Put-to-Light, einen oder mehrere Arbeitsschritte, z.B. Montageschritt, Demontageschritt, Fertigungsanweisung, Transportanweisung oder dergleichen sein oder aufweisen. Der Auftrag und/oder die Arbeitsanweisung kann eine Herstellung, eine Fertigung, einen Transport, eine Einlagerung oder Entnahme, eine Montage, eine Demontage, oder dergleichen, und/oder entsprechende Verfahren, vollständig oder teilweise umfassen.

Es kann vorgesehen sein, dass eine oder die Datenübertragung zwischen mobilen Datenerfassungsgerät 3 und Kommunikationseinheit 104, zwischen Datenerfassungsgerät 3 und Verwaltungssystem 1, zwischen Objekt 4 und Kommunikationseinheit 104, und/oder zwischen Objekt 4 und Verwaltungssystem 1 drahtlos erfolgen kann. Die Datenübertragung kann beispielsweise über ein geeignetes Low Power Wide Area Network, narrowband-IOT, Bluetooth, ZigBee, Z-Wave, ANT+, LTE, oder dergleichen, und/oder WiFi, WLAN, und/oder andere geeignete Protokolle erfolgen. Alternativ oder zusätzlich kann auch eine kabelgebundene Datenübertragung vorgesehen sein.

Das mobile Datenerfassungsgerät 3 kann ein Handgerät sein oder aufweisen. Das mobile Datenerfassungsgerät 3 kann ein Smartphone, Tablet, Laptop oder dergleichen sein oder aufweisen. Das mobile Datenerfassungsgerät 3 kann ein Handscanner sein oder aufweisen. Das mobile Datenerfassungsgerät 3 kann ein Funktionshandschuh sein oder aufweisen. Der Funktionshandschuh kann einen Scanner aufweisen.

Es kann vorgesehen sein, dass das mobile Datenerfassungsgerät 3 eine oder die Kennung 2 optisch, z.B. durch ein Scannen, erfassen kann. Beispielsweise kann das mobile Datenerfassungsgerät 3 eine geeignete optische Einheit, z.B. eine Kamera oder dergleichen, aufweisen. Alternativ oder zusätzlich kann eine Kennung 2 und/oder Informationen durch das mobile Datenerfassungsgerät 3 über RFID, NFC, drahtlos, elektromagnetisch oder dergleichen erfasst sein oder werden. Kennung 2 und mobiles Datenerfassungsgerät 3 können geeignet eingerichtet sein. Die Kennung 2 kann z.B. einen Sender, und das mobiles Datenerfassungsgerät 3 einen Empfänger aufweisen.

Es kann vorgesehen sein, dass das mobile Datenerfassungsgerät 3 ein Display 14 aufweisen kann. In einigen Ausführungsformen kann das mobile Datenerfassungsgerät 3 eine Computereinheit aufweisen. Es kann vorgesehen sein, dass das mobile Datenerfassungsgerät 3 eine App oder eine Software ausführen kann, über die ein Bediener und/oder Benutzer Steuerbefehle an das Verwaltungssystem 1 übermitteln kann. In einigen Ausführungsformen kann durch einen oder mehrere Steuerbefehle der Ablauf und/oder einer, mehrere oder alle Schritte des Verfahrens gesteuert, kontrolliert, eingeleitet, gestoppt, abgebrochen, wiederaufgenommen, bestätigt und/oder dergleichen sein oder werden. Es kann z.B. vorgesehen sein, dass der Benutzer und/oder Bediener das Erfassen der Kennung 2 durch einen Steuerbefehl initiieren kann.

In einigen Ausführungsformen kann beispielsweise ein Benutzer und/oder Bediener ein Kommissionieren einer oder mehrerer Waren, und/oder Objekte, durch einen Steuerbefehl initiieren. In einigen Ausführungsformen kann ein Kommissionieren auch ohne expliziten Steuerbefehl des Benutzers und/oder Bedieners initiiert werden, und/oder automatisch, beispielsweise nach vorgegebenen Regeln oder bei Erfüllung vorgegebener Bedingungen, erfolgen. Das mobile Datenerfassungsgerät 3 kann dem Verwaltungssystem 1 mitteilen, dass eine Ware kommissioniert werden soll. Diese Mitteilung und/oder Anweisung kann beispielsweise mit den erfassten Informationen an das Verwaltungssystem 1 kommuniziert werden. Alternativ oder zusätzlich kann die Mitteilung und/oder Anweisung auch vor und/oder nach dem Erfassen, und/oder Übermitteln der Informationen, von dem mobilen Datenerfassungsgerät 3 an das Verwaltungssystem 1 übermittelt sein oder werden. Das Verwaltungssystem 1 kann die übermittelten Informationen und/oder Mittelung verarbeiten, beispielsweise eine oder mehrere Industriekoordinaten 5 ändern, anpassen, löschen und/oder neu erstellen, ein oder mehrere Objekte 4 identifizieren und/oder eine oder mehrere Anweisungen erstellen.

In einigen Ausführungsformen kann beispielsweise ein Benutzer und/oder Bediener ein Lagern einer oder mehrerer Waren, und/oder Objekte, durch einen Steuerbefehl initiieren. In einigen Ausführungsformen kann ein Einlagern auch ohne expliziten Steuerbefehl des Benutzers und/oder Bedieners initiiert werden, und/oder automatisch, beispielsweise nach vorgegebenen Regeln oder bei Erfüllung vorgegebener Bedingungen, erfolgen. Das mobile Datenerfassungsgerät 3 kann dem Verwaltungssystem 1 mitteilen, dass eine Ware gelagert werden soll. Diese Mitteilung und/oder Anweisung kann beispielsweise mit den erfassten Informationen an das Verwaltungssystem 1 kommuniziert werden. Alternativ oder zusätzlich kann die Mitteilung und/oder Anweisung auch vor und/oder nach dem Erfassen, und/oder Übermitteln der Informationen, von dem mobilen Datenerfassungsgerät 3 an das Verwaltungssystem 1 übermittelt sein oder werden. Das Verwaltungssystem 1 kann die übermittelten Informationen und/oder Mittelung verarbeiten, beispielsweise eine oder mehrere Industriekoordinaten 5 ändern, anpassen, löschen und/oder neu erstellen, ein oder mehrere Objekte 4 identifizieren und/oder eine oder mehrere Anweisungen erstellen.

In einigen Ausführungsformen kann beispielsweise ein Benutzer und/oder Bediener einen Transport einer oder mehrerer Waren durch einen Steuerbefehl initiieren. In einigen Ausführungsformen kann ein Transport auch ohne expliziten Steuerbefehl des Benutzers und/oder Bedieners initiiert werden, und/oder automatisch, beispielsweise nach vorgegebenen Regeln oder bei Erfüllung vorgegebener Bedingungen, erfolgen Das mobile Datenerfassungsgerät 3 kann dem Verwaltungssystem 1 mitteilen, dass eine Ware gelagert werden soll. Diese Mitteilung und/oder Anweisung kann beispielsweise mit den erfassten Informationen an das Verwaltungssystem 1 kommuniziert werden. Alternativ oder zusätzlich kann die Mitteilung und/oder Anweisung auch vor und/oder nach dem Erfassen, und/oder Übermitteln der Informationen, von dem mobilen Datenerfassungsgerät 3 an das Verwaltungssystem 1 übermittelt sein oder werden. Das Verwaltungssystem 1 kann die übermittelten Informationen und/oder Mittelung verarbeiten, beispielsweise eine oder mehrere Industriekoordinaten 5 ändern, anpassen, löschen und/oder neu erstellen, ein oder mehrere Objekte 4 identifizieren und/oder eine oder mehrere Anweisungen erstellen.

Die Erfindung ist nicht zwingend auf ein Kommissionieren, Einlagern und/oder Transportieren von Waren und/oder Objekten beschränkt. Die Erfindung ist auch in Produktionssystemen einsetzbar. Beispielsweise kann ein Monteur und/oder Arbeiter, der ein Produkt zusammenbauen und/oder herstellen soll, durch Erfassen von Kennungen 2 geeignete Fertigungsschritte, Montageschritte und/oder Montageanleitungen angezeigt bekommen, beispielsweise auf geeigneten im Montagebereich angeordneten Bildschirmen. Beispielsweise kann ein Monteur und/oder Arbeiter nach einem Scannen und/oder Erfassen einer Kennung Eigenschaften von Bauteilen und/oder eines zu fertigenden Produkts, und/oder Prozessschritte angezeigt bekommen.

Das mobile Datenerfassungsgerät 3 kann eine Kommunikationsschnittstelle, z.B. eine Funkschnittstelle, aufweisen, über die das mobile Datenerfassungsgerät 3 mit dem Verwaltungssystem 1, z.B. über Kommunikationseinheit 104, Daten austauschen kann.

Die Datenbank 102 kann beispielsweise das Industriekoordinatensystem 6, und/oder Industriekoordinaten 5, speichern. Es kann vorgesehen sein, dass in der Datenbank 102 Eigenschaften und/oder Daten von Objekten 4 gespeichert und/oder hinterlegt sind.

Das externe Gerät 103 kann ein Computergerät sein oder aufweisen. Das externe Gerät 103 kann einen Zustand und/oder Status des Verwaltungssystems 1 und/oder des Systems 100 abfragen, erfassen, bestimmen und/oder analysieren. Es kann vorgesehen sein, dass das externe Gerät 103 auf das Industriekoordinatensystem 6 zugreifen kann. In einigen Ausführungsformen kann das externe Gerät 3 das Industriekoordinatensystem 6 ändern, beispielsweise eine Industriekoordinate 5 ändern, hinzufügen oder entfernen. Es kann vorgesehen sein, dass das externe Gerät 103 einen Steuerbefehl, eine Anweisung und/oder eine Mitteilung an das Verwaltungssystem 1 übermitteln kann.

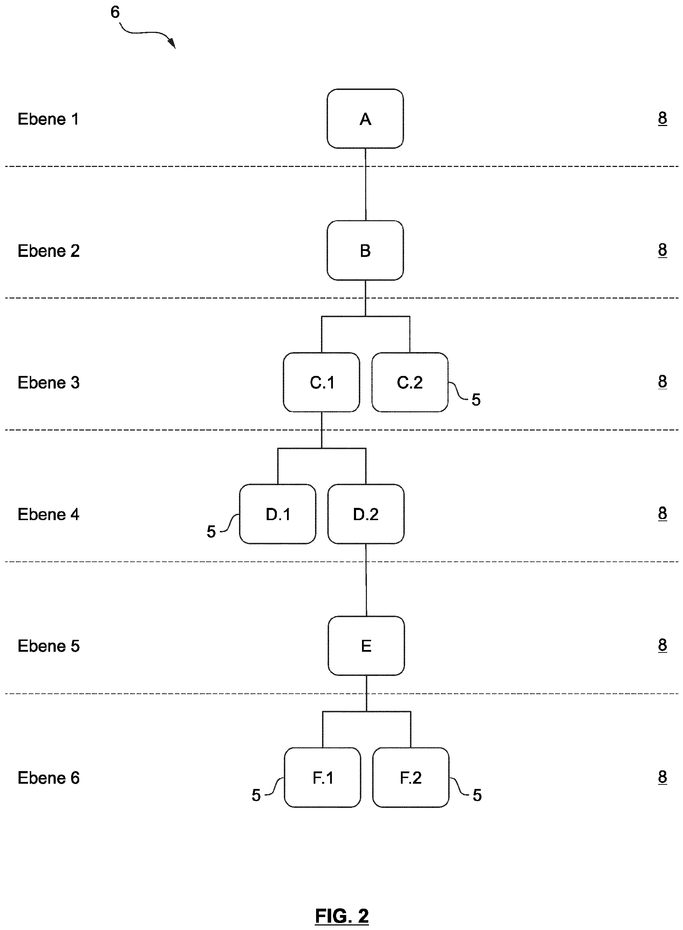

In den Figuren 2, 3, 4 und 5 sind beispielhafte Industriekoordinatensysteme 6 gezeigt. Das Industriekoordinatensystem 6 kann hierarchisch aufgebaut sein, und/oder eine Baumstruktur aufweisen. Das Industriekoordinatensystem 6 und/oder eine Industriekoordinate 5 kann eine oder mehrere Hierarchieebenen 8 aufweisen. Auch wenn in den Figuren jeweils sechs Hierarchieebenen 8 gezeigt sind (die in den Figuren mit "Ebene 1" bis "Ebene 6" bezeichnet sind), kann das Industriekoordinatensystem 6 auch weniger als sechs Hierarchieebenen 8 oder mehr als sechs Hierarchieebenen 8 aufweisen, vorgeben und/oder strukturieren. Eine Industriekoordinate 5 kann mittels des Industriekoordinatensystems 6 definiert sein. Das Industriekoordinatensystem 6 kann eine oder mehrere Industriekoordinaten 5 definieren, strukturieren und/oder verwalten. Das Industriekoordinatensystem 6 und/oder die Industriekoordinate 5 kann hierarchisch und/oder baumförmig sein, und/oder hierarchisch und/oder baumförmig aufgebaut, strukturiert und/oder hinterlegt sein.

Das Industriekoordinatensystem 6 und/oder die Industriekoordinaten 5 können eine baumförmige Struktur haben. Die Industriekoordinaten 5 können zumindest teilweise gruppiert sein oder werden.

Eine Industriekoordinate 5 kann aus mehreren Bestandteilen bestehen und/oder mehrere Bestandteile aufweisen. In einigen Ausführungsformen kann eine Industriekoordinate 5 einen Bestandteil je Hierarchieebene 8 des Industriekoordinatensystems 6 aufweisen. Mindestens eine Industriekoordinate 5 kann einen Bestandteil in einer Hierarchieebene 8 haben, und/oder eine Hierarchieebene 8 umfassen, in der mindestens eine andere Industriekoordinate 5 keinen Bestandteil hat und/oder die nicht von der anderen Industriekoordinate 5 umfasst ist oder wird. Es kann auch vorgesehen sein, dass das Industriekoordinatensystem 6 eine Anzahl Hierarchieebenen 8 aufweist, und mindestens eine Industriekoordinate 5 eine Anzahl Bestandteile kleiner der Anzahl Hierarchieebenen 8 des Industriekoordinatensystems 6 umfasst oder aus solchen besteht. In anderen Worten muss nicht zwingend eine Industriekoordinate 5 einen Bestandteil für jede Hierarchieebene 8 des Industriekoordinatensystems 6 haben oder umfassen. Weist eine Industriekoordinate 5 einen Bestandteil in einer Hierarchieebene 8 auf, und/oder einen einer Hierarchieebene 8 zugeordneten Bestandteil auf, so kann die Industriekoordinate 5 die entsprechende Hierarchieebene 8 umfassen. Eine, mehrere oder alle Industriekoordinaten 5 können ein alphanumerischer String und/oder eine alphanumerische Zeichenkette sein oder aufweisen.

Es kann vorgesehen sein, dass mindestens einer Hierarchieebene 8 eine physikalische Eigenschaft zugeordnet ist. Insbesondere kann auch vorgesehen sein, dass jeder Hierarchieebene 8 eine physikalische Eigenschaft zugeordnet ist. Eine Industriekoordinate 5 eines Objekts 4 kann einen Bestandteil der entsprechenden Hierarchieebene 8 aufweisen, wenn das Objekt 4 die entsprechende physikalische Eigenschaft hat.

Es kann vorgesehen sein, dass mindestens ein Bestandteil einer Industriekoordinate 5 eine physikalische Eigenschaft zugeordnet ist. Insbesondere kann auch vorgesehen sein, dass jedem Bestandteil einer Industriekoordinate 5 eine physikalische Eigenschaft zugeordnet ist.

Es kann vorgesehen sein, dass eine Hierarchieebene 8 eine physikalische Eigenschaft abbildet und/oder repräsentiert, und einen Bestandteil der Hierarchieebene 8 einen Wert der entsprechenden physikalischen Eigenschaft repräsentiert und/oder abbildet.

Beispielsweise kann eine Hierarchieebene 8 eine Ortsangabe und/oder eine Positionsangabe eines entsprechenden Objekts 4 repräsentieren, und ein Bestandteil der entsprechenden Hierarchieebene 8 einer Industriekoordinate 5 den tatsächlichen Ort und/oder die tatsächliche Position des Objekts 4 repräsentieren, beispielsweise ein Kontinent, ein Land, eine Stadt und/oder Region, ein Aufstellungsort, ein Lagerort, eine Fabrikhalle, ein Montagetisch, oder dergleichen. Beispielsweise kann ein Bestandteil eine Positionskoordinate, z.B. einen Längengrad und/oder einen Breitengrad, aufweisen, abbilden, repräsentieren, umfassen, oder dergleichen.

Beispielsweise kann eine Hierarchieebene 8 eine Mengenangabe eines entsprechenden Objekts 4 repräsentieren, und ein Bestandteil der entsprechenden Hierarchieebene 8 einer Industriekoordinate 5 die tatsächliche Anzahl und/oder Menge des Objekts 4 repräsentieren, beispielsweise "2", "zwei", "7358", "dreihundertvierundzwanzig" oder dergleichen.

Beispielsweise kann eine Hierarchieebene 8 einen bei der Herstellung des entsprechenden Objekts 4 Maschinentyp repräsentieren, und ein Bestandteil der entsprechenden Hierarchieebene 8 einer Industriekoordinate 5 die tatsächlich bei der Fertigung oder Herstellung des Objekts 4 verwendete Maschine repräsentieren, beispielsweise "Fräse 15", "Förderband C-7A3", oder z.B. eine Modellnummer wie z.B. "X423AB".

Beispielsweise kann eine Hierarchieebene 8 eine Teilenummer eines entsprechenden Objekts 4 repräsentieren, und ein Bestandteil der entsprechenden Hierarchieebene 8 einer Industriekoordinate 5 die tatsächliche Teilenummer des Objekts 4 repräsentieren.

Beispielsweise kann eine Hierarchieebene 8 eine Art eines Bauteils oder Ware eines entsprechenden Objekts 4 repräsentieren, und ein Bestandteil der entsprechenden Hierarchieebene 8 einer Industriekoordinate 5 das tatsächliche Bauteil oder Ware repräsentieren. Beispielsweise kann eine Hierarchieebene 8 definieren, dass das Bauteil und/oder die Ware ein Zahnrad, eine Feder, eine Stoffbahn, eine Schraube, ein Container, eine Schale, ein Halbzeug und/oder dergleichen ist, und ein Bestandteil beispielsweise eine Produktbezeichnung des entsprechenden Bauteils und/oder der entsprechenden Ware, eine Typennummer, einen für das Bauteil und/oder die Ware charakteristischen Wert oder dergleichen repräsentieren und/oder abbilden.

In einigen Ausführungsformen kann eine Industriekoordinate 5 z.B. einen Typ eines Objekts, einen Lagerort und eine Menge der an dem Lagerort gelagerten Objekte umfassen. Wird eine Anzahl Objekte entnommen, z.B. eins oder mehr als eins, so kann die entsprechende Industriekoordinate 5 z.B. dahingehend geändert werden, dass der die Anzahl repräsentierende Bestandteil dahingehend geändert wird, dass er die nach dem Entnehmen an, in oder bei dem Lagerort vorhandene Anzahl Objekte repräsentiert, beispielsweise um die Anzahl entnommener Objekte verringert sein oder werden. Für das oder die entnommenen Objekte kann beispielsweise eine oder mehrere neue Industriekoordinate 5 erzeugt und/oder erstellt sein oder werden. Werden mehr als ein Objekt entnommen, so kann vorgesehen sein, dass genau eine neue Industriekoordinate 5 erstellt und/oder erzeugt sein oder werden kann, wobei ein Bestandteil der neuen Industriekoordinate 5 die Anzahl der entnommenen Objekte umfassen kann. Es kann aber auch vorgesehen sein, dass für jedes entnommene Objekt eine eigene Industriekoordinate 5 erstellt und/oder erzeugt sein oder werden kann, und/oder mindestens zwei Industriekoordinaten 5 erstellt und/oder erzeugt sein oder werden können, die jeweils mindestens eines oder mehrere entnommene Objekte umfassen und/oder repräsentieren.

In einigen Ausführungsformen kann eine Industriekoordinate 5 z.B. einen Typ eines Objekts, einen Lagerort und eine Menge der an dem Lagerort gelagerten Objekte umfassen. Wird eine Anzahl Objekte gelagert und/oder abgelegt, z.B. eins oder mehr als eins, so kann die entsprechende Industriekoordinate 5 z.B. dahingehend geändert werden, dass der die Anzahl repräsentierende Bestandteil dahingehend geändert wird, dass er die nach dem Lagern und/dem Ablegen an, in oder bei dem Lagerort vorhandene Anzahl Objekte repräsentiert, beispielsweise um die Anzahl entnommener Objekte erhöht sein oder werden. Eine oder mehrere dem oder den abgelegten und/oder gelagerten Objekten zugeordnete Industriekoordinate 5 kann gelöscht und/oder entfernt sein oder werden. Dies sind lediglich nicht-abschließende Beispiele. Ein Bestandteil einer Industriekoordinate 5 kann beispielsweise einen Wert oder eine Spezifizierung einer physikalischen Eigenschaft darstellen, umfassen, abbilden und/oder repräsentieren.

Die in den nachfolgenden Figuren 2, 3, 4 und 5 beispielshaften Bestandteile "A", "B.1", etc. der Industriekoordinaten 5 sind in den Figuren aus Abstraktionsgründen nur schematisch benannt. Es kann aber insbesondere erfindungsgemäß vorgesehen sein, dass die Bestandteile derart benannt sind, dass die dadurch repräsentierte physikalische Eigenschaft des entsprechenden Objekts 4 unmittelbar ersichtlich ist. Lediglich beispielhaft kann eine Industriekoordinate 5 "Europa_Deutschland_München_Standort1_Halle5_Lager3_Reihe17_Fach5_Zahnra d_Zahnung32_Anzahl15", oder "E_DE_M_1_5_3_17_5_Z_32_15", oder z.B. "US_ _NY_Halle5_Maschine3" lauten. Es kann vorgesehen sein, dass die Industriekoordinaten 5 und/oder deren Bestandteile derart gewählt sein oder werden können, dass sie für einen Menschen unmittelbar als die entsprechende physikalische Eigenschaft interpretierbar sein können. Damit kann eine Vergleichbarkeit und Verifzierbarkeit der Industriekoordinaten 5 bzw. der zugeordneten Objekte 4 weiter erhöht werden.

Die beispielshaften Trennzeichen bzw. Trennungen der Bestandteile durch Unterstriche, "_", sind lediglich beispielhaft. Es sind auch andere Trennzeichen möglich, beispielsweise, aber nicht abschließend, Semikola ";", Punkte ".", Kommata ",", Bindestriche bzw. Minuszeichen "-", oder dergleichen.

Auch wenn die beispielshaften Bestandteile "A", "B.1", etc. der Industriekoordinaten 5 nur abstrakt benannt sind, so können diese physikalischen Eigenschaften und/oder physikalischen Werten des zugeordneten Objekts 4 entsprechen. Beispielsweise kann ein Wörterbuch oder eine Liste vorgesehen sein, die die abstrakten Bezeichnungen eindeutig zu physikalischen Eigenschaften und/oder physikalischen Werten mappt und/oder zuordnet. In einigen Ausführungsformen können beispielsweise Korrespondenzlisten, Äquivalenzlisten, Wörterbücher, Mappings, Zuordnungen oder dergleichen vorgesehen sein.

Die Anzahl der in einer Industriekoordinate 5 abgebildeten und/oder repräsentierten physikalischen Eigenschaften kann von der Anzahl realer physikalischer Eigenschaften des zugeordneten (realen) Objekts 4 abweichen. Insbesondere kann die Anzahl der in einer Industriekoordinate 5 abgebildeten und/oder repräsentierten physikalischen Eigenschaften kleiner als die Anzahl realer physikalischer Eigenschaften des zugeordneten (realen) Objekts 4 sein. Es ist nicht zwingend erforderlich, dass das Industriekoordinatensystem 6 und/oder eine Industriekoordinate 5 alle tatsächlichen physikalischen Eigenschaften und/oder physikalischen Werte eines realen, eine Industriekoordinate 5 zugeordneten Objekts 4 abbilden und/oder repräsentieren muss.

Bei dem in Figur 2 gezeigten Ausführungsbeispiel kann beispielsweise eine erste Industriekoordinate 5 durch A_B_C.1_D.1 definiert sein. Diese beispielhafte erste Industriekoordinate 5 kann damit beispielsweise, je nach Definition der Hierarchieebenen 8, eine, zwei, drei oder vier physikalische Eigenschaften eines der ersten Industriekoordinate 5 zugeordneten Objekts 4 abbilden. In einigen Ausführungsformen kann diese beispielhafte erste Industriekoordinate 5 vier physikalische Eigenschaften eines der ersten Industriekoordinate 5 zugeordneten Objekts 4 abbilden. Das zugeordnete Objekt 4 kann eindeutig durch die erste Industriekoordinate 5 bestimmt sein oder werden.

Bei dem in Figur 2 gezeigten Ausführungsbeispiel kann beispielsweise eine zweite Industriekoordinate 5 durch A_B_C.2 definiert sein. Die zweite Industriekoordinate 5 kann einem zweiten Objekt 4 zugeordnet sein, und/oder ein zweites der Industriekoordinate 5 zugeordnetes Objekts 4 eindeutig identifizieren und/oder entsprechen.

Bei dem in Figur 2 gezeigten Ausführungsbeispiel kann beispielsweise eine dritte Industriekoordinate 5 durch A_B_C.1_D.2_E_F.1 definiert sein. Eine vierte Industriekoordinate 5 kann durch A_B_C.1_D.2_E_F.2 definiert sein. Ein drittes Objekt 4 kann eindeutig der dritten Industriekoordinate 5 entsprechen und/oder abgebildet sein, und/oder durch diese identifiziert und/oder bestimmt sein oder werden. Ein viertes Objekt 4 kann eindeutig der vierten Industriekoordinate 5 entsprechen und/oder abgebildet sein, und/oder durch diese identifiziert und/oder bestimmt sein oder werden.

Bei dem in Figur 2 gezeigten Ausführungsbeispiel können das erste Objekt 4, das zweite Objekt 4, das dritte Objekt 4 und das vierte Objekt 4 dieselben physikalischen Eigenschaften A und/oder B haben. Die jeweiligen Objekte 4 können sich aber in weiteren physikalischen Eigenschaften unterscheiden.

Beispielsweise kann das zweite Objekt 4 dieselbe erste physikalische Eigenschaft A und dieselbe zweite physikalische Eigenschaft B wie das erste Objekt 4 aufweisen. Das zweite Objekt 4 kann aber eine physikalische Eigenschaft C. 2 haben, die von den physikalischen Eigenschaften C.1 und D.1 des ersten Objekts 4 verschieden sein kann. Beispielsweise können das erste Objekt 4 und das zweite Objekt 4 in derselben Lagerhalle (z.B. durch die Bestandteile "A", und "B" der jeweiligen Ebenen 1 und 2 abgebildet und/oder repräsentiert), aber an verschiedenen Orten in derselben Lagerhalle (z.B. durch die Bestandteile "C.1" und "C.2" der Ebene 3 abgebildet und/oder repräsentiert) gelagert und/oder aufbewahrt sein. Die Industriekoordinate 5 des ersten Objekts 4 kann zudem z.B. eine physikalische Eigenschaft abbilden, die dem zweiten Objekt 4 fehlt, oder die zumindest für das zweite Objekt 4 nicht relevant ist. Beispielsweise kann das erste Objekt 4 als Bauteiltyp entsprechend "C.1" (z.B. "Stirnzahnrad 15-8" oder dergleichen) abgebildet sein, und das erste Objekt 4 ein Stirnzahnrad sein oder aufweisen. Die Ebene 4 kann damit beispielsweise dem Typ "Stirnzahnrad" entsprechen, und der Bestandteil "D.1" der Typennummer oder Typenbezeichnung (z.B. "Stirnzahnrad 15A-8", oder z.B. nur "15A-8") entsprechen. Das zweite Objekt 4 hingegen kann kein Stirnzahnrad sein oder aufweisen, so dass die Industriekoordinate 5 des zweiten Objekts 4 z.B. keinen Bestandteil in der Ebene 4 haben kann.

Beispielsweise können das dritte Objekt 4 und das vierte Objekt 4 an demselben Ort in derselben Lagerhalle wie das erste Objekt 4 gelagert und/oder aufbewahrt sein ("A,", "B" und "C.1" bzw. "A_B_C.1"), wie durch dieselben Bestandteile der Ebene 1, der Ebene 2 und Ebene 3 abgebildet und/oder repräsentiert. Beispielsweise können das dritte Objekt 4 und das vierte Objekt 4 Stirnzahnräder sein oder aufweisen, aber von einem von dem ersten Objekt 4 verschiedenen Typ, so dass die Industriekoordinaten 5 des dritten Objekts 4 und des vierten Objekts 4 einen Bestandteil in der Ebene 4 haben können ("D.2"), der sich aber von dem Bestandteil der Industriekoordinate 5 des ersten Objekts ("D.1") unterscheiden kann. Beispielsweise können das dritte Objekt 4 und das vierte Objekt 4 ein Stirnzahnrad der Typennummer oder Typenbezeichnung (z.B. "Stirnzahnrad 17B-10", oder z.B. nur "17B-10") entsprechen.

Beispielsweise können das dritte Objekt 4 und das vierte Objekt 4 durch dieselbe Maschine und/oder denselben Fertigungsprozess hergestellt sein. Beispielsweise kann die Ebene 5 einen Maschinentyp und/oder Fertigungsprozess abbilden und/oder repräsentieren, und der Bestandteil E der Industriekoordinaten 5 die tatsächliche Maschine bzw. deren Bezeichnung abbilden, und/oder den spezifischen Fertigungsprozess benennen. Beispielswese können das dritte Objekt 3 und das vierte Objekt 4 gefräst sein, und/oder mit einer Fräse hergestellt worden sein. Beispielswese können das dritte Objekt 3 und das vierte Objekt 4 von der spezifischen Fräse "F10.2.5" hergestellt worden sein. Der Bestandteil ("E") der Industriekoordinaten 5 des dritten Objekts 3 und des vierten Objekts 4 kann entsprechend ein Fräsen und/oder Fräse "F10.2.5" repräsentieren und/oder abbilden.

Beispielsweise können sich das dritte Objekt 4 und das vierte Objekt 4 dadurch unterscheiden, dass das dritte Objekt 4 zum Einbau in ein Fahrzeuggetriebe vorgesehen bzw. gelagert und/oder aufbewahrt ist, wohingegen das vierte Objekt 4 als Ersatzteil für einen Kompressor vorgesehen bzw. gelagert und/oder aufbewahrt ist. Beispielsweise kann Ebene 6 einen Verwendungszweck abbilden oder repräsentieren, und der Bestandteil der Ebene 6 der jeweiligen Industriekoordinaten die tatsächliche Verwendung abbilden und/oder repräsentieren. Alternativ können sich das dritte Objekt 4 und das vierte Objekt 4 dadurch unterscheiden, dass das dritte Objekt 4 nitriert ist, wohingegen das vierte Objekt 4 nicht nitriert ist. Beispielsweise kann Ebene 6 eine Nitrierung abbilden oder repräsentieren, und der Bestandteil der Ebene 6 der jeweiligen Industriekoordinaten das Vorliegen einer Nitrierung (z.B. "Ja", "Nein", "1", "0") abbilden und/oder repräsentieren.

Die vorstehend beschriebenen Beispiele sind lediglich beispielhaft. Das Industriekoordinatensystem 6, die Industriekoordinaten 5 und/oder die Objekte 4 sind nicht darauf beschränkt. Das Industriekoordinatensystem 6 und die Industriekoordinaten 5 sind flexibel für eine Vielzahl verschiedener Objekte 4 verwendbar.

Industriekoordinaten 5 können einfach und unkompliziert dem Industriekoordinatensystem 6 hinzugefügt werden. Neue Industriekoordinaten 5 können einfach und unkompliziert angelegt sein oder werden.

Soll beispielsweise zu dem in Fig. 2 gezeigten Industriekoordinatensystem 6 eine Industriekoordinate 5 mit den Bestandteilen bzw. den entsprechend repräsentierten physikalischen Eigenschaften "A_B_C.1_D.3" hinzugefügt sein oder werden, kann ausgehend von dem Knoten bzw. Bestandteil C.1 im Industriekoordinatensystem 6 eine weitere Kante, Verknüpfung und oder Verbindung zu einem neuen Knoten bzw. Bestandteil D.3 hinzugefügt sein oder werden. Um in dem mit Fig. 2 oben beschriebenen Beispiel zu bleiben, kann beispielsweise eine fünfte Industriekoordinate 5, die ein fünftes Objekt 4 abbildet oder repräsentiert, das an demselben Ort in derselben Lagerhalle wie das erste, dritte und vierte Objekt 4 gelagert und/oder aufbewahrt sein kann ("A,", "B" und "C.1" bzw. "A_B_C.1") und das ein Stirnzahnrad mit Typenbezeichnung "XAB" (entsprechend "D.3") sein kann, einfach und unkompliziert in dem Industriekoordinatensystem 6 angelegt und/oder hinzugefügt sein oder werden.

Soll beispielsweise aus dem in Fig. 2 gezeigten Industriekoordinatensystem 6 die erste Industriekoordinate 5 ("A_B_C.1_D.1") entfernt und/oder gelöscht werden, beispielsweise weil oder wenn das erste Objekt 4 aus dem System entfernt ist oder wird oder das System verlassen hat, so kann der Knoten bzw. Bestandteil D.1 gelöscht und/oder entfernt werden, und/oder die entsprechende Kante bzw. Verbindung entfernt oder gelöscht werden.

Entsprechend lassen sich einfach und unkompliziert Industriekoordinaten 5 einfach und unkompliziert hinzufügen oder entfernen. Für das Hinzufügen und/oder Entfernen kann damit zudem wenig Aufwand, Rechenaufwand und/oder wenig Computeroperationen nötig sein.

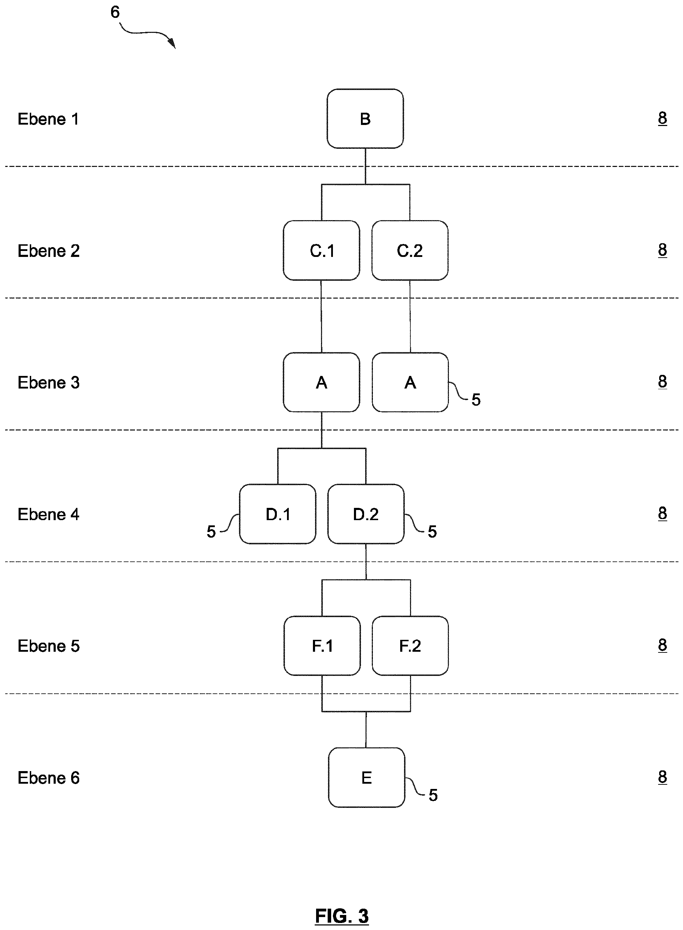

Die Zuordnung zu den Ebenen 6, und/oder die von den Ebenen 6 repräsentierten physikalischen Eigenschaften, sind nicht auf die beschriebenen begrenzt. Eine, mehrere oder alle Ebenen 6 können alternativ oder zusätzlich anders angeordnet sein, so dass sich für dieselben physikalischen Eigenschaften bzw. dieselben Objekte 4 eine verschiedene Baumstruktur ergeben kann, und/oder die entsprechenden Industriekoordinaten 5 entsprechend verschieden gebildet und/oder strukturiert sein können. Beispielhaft zeigt Figur 3 ein von dem in Figur 2 verschiedenes Industriekoordinatensystem 6, in dem dieselben Objekte 4, d.h. das erste Objekt 4, das zweite Objekt 4, das dritte Objekt 4 und das vierte Objekt 4 mit denselben physikalischen Eigenschaften und entsprechenden Industriekoordinaten 5 abgebildet bzw. repräsentiert sein können.

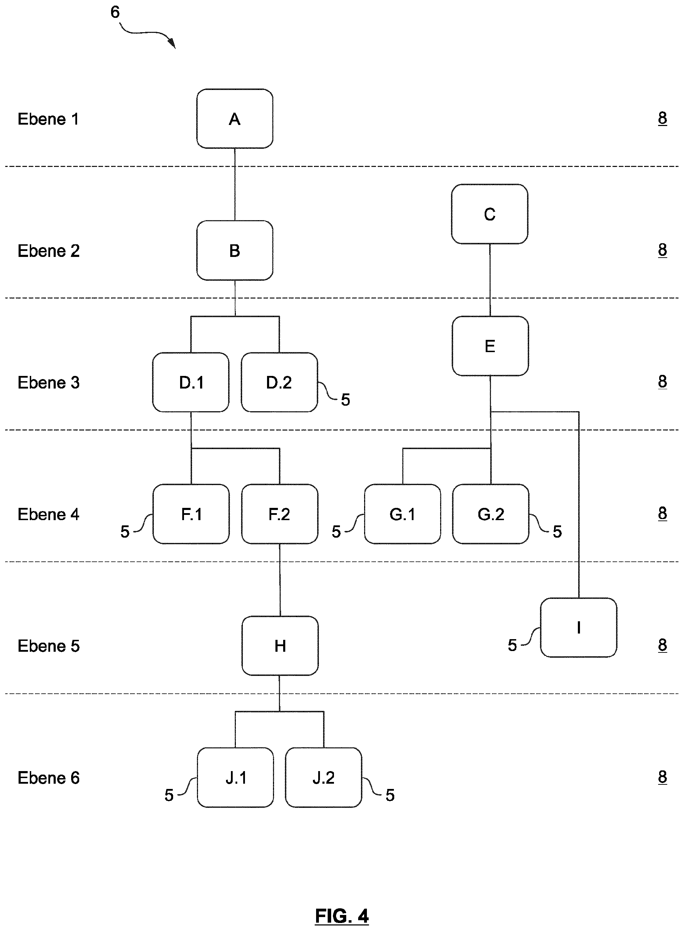

Bei dem in Figur 4 gezeigten Ausführungsbeispiel kann eine erste Industriekoordinate 5 durch A_B_D.2, eine zweite Industriekoordinate 5 durch A_B_D.1_F.1, eine dritte Industriekoordinate 5 durch A_B_D.1_F.2_H_J.1, eine vierte Industriekoordinate 5 durch A B_D.1_F.2_H_J.2, eine fünfte Industriekoordinate 5 durch C_E_G.1, eine sechste Industriekoordinate 5 durch C_E_G.2 und/oder eine siebte Industriekoordinate 5 durch C_E_I bestimmt und/oder definiert sein. Den jeweiligen Industriekoordinaten 5 können entsprechend jeweils Objekte 4 eindeutig zugeordnet sein. Es kann vorgesehen sein, dass mindestens zwei Industriekoordinaten 5 des Industriekoordinatensystems 6 keine gemeinsamen Bestandteile haben (vgl. z.B. "A_B_D.1_F.1" und "C_E_G.1" in Fig. 4). Es kann vorgesehen sein, dass mindestens eine Industriekoordinaten 5 Bestandteile haben kann, die nicht unmittelbar benachbarten Ebenen zugeordnet sein müssen (vgl. z.B. "C_E_I" in Fig. 4). Es kann vorgesehen sein, dass mindestens eine Industriekoordinate 5 nicht auf oder für jede Hierarchieebene 8 des Industriekoordinatensystems 6 einen jeweiligen Bestandteil umfasst.

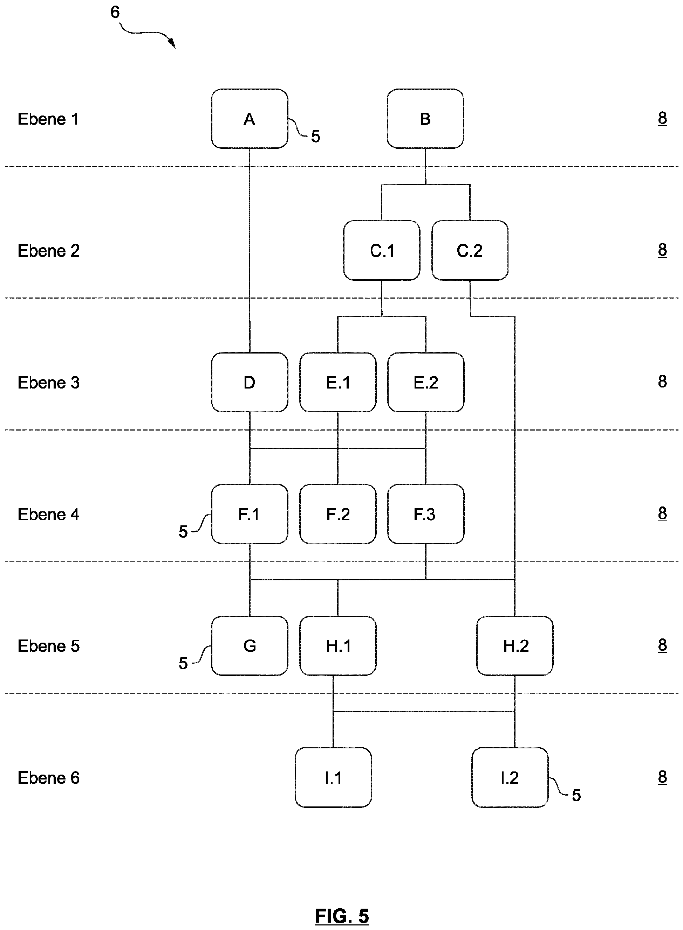

Bei dem in Figur 5 gezeigten Ausführungsbeispiel kann eine Vielzahl Industriekoordinaten 5 in dem beispielhaft gezeigten Industriekoordinatensystem 6 vorgesehen sein. Z.B. kann das in Figur 5 gezeigte Ausführungsbeispiel einundfünfzig Industriekoordinaten 5 umfassen. Wie insbesondere in Figur 5 erkennbar, können die Industriekoordinaten 5 gruppiert sein. Damit kann der Speicherbedarf reduziert sein oder werden. Zudem kann eine Zugriffszeit und/oder Abrufzeit reduziert sein oder werden.

Mindestens eine, mehrere oder alle Hierarchieebenen 8 einer physikalischen Eigenschaft eines Objekts 4 entsprechen, und/oder eine physikalische Eigenschaft repräsentieren und/oder abbilden, so dass Objekte 4 bzw. deren entsprechende Industriekoordinaten 5 einfach im Industriekoordinatensystem gruppiert und/oder verknüpft sein oder werden.

Zudem können die Objekte 4 und die ihnen zugeordneten Industriekoordinaten 5 einfach verifiziert sein oder werden, da die physikalischen Eigenschaften der (realen) Objekte 4 leicht und einfach überprüfbar und mit den entsprechenden Hierarchieebenen 8 (Ebenen 1 bis 6 in den Figuren) und/oder den Industriekoordinaten 5, und/oder den Bestandteilen ("A", "B.1" etc.) der Industriekoordinaten 5, verglichen werden können.

Dadurch, dass mindestens eine, mehrere oder alle Hierarchieebenen 8 einer physikalischen Eigenschaft eines Objekts 4 entsprechen, und/oder eine physikalische Eigenschaft repräsentieren und/oder abbilden, und entsprechend die Objekte 4 einfach im Industriekoordinatensystem gruppiert und/oder verknüpft sein oder werden können, können einfach und unkompliziert neue Industriekoordinaten 5 eingefügt sein oder werden. Dadurch, dass das Industriekoordinatensystem 6 eine baumförmige Struktur aufweisen kann, können die Industriekoordinaten 5 gruppiert und/oder verknüpft sein oder werden, und können einfach und unkompliziert neue Industriekoordinaten 5 eingefügt sein oder werden. Durch die Gruppierung kann Speicherbedarf reduziert sein oder werden. Durch die Gruppierung kann eine Zugriffszeit und/oder Abrufzeit der Industriekoordinaten 5 reduziert sein oder werden. Beispielsweise können gruppierte Industriekoordinaten 5 nahe beieinander in einem Speicher hinterlegt sein oder werden.

Dadurch, dass mindestens eine, mehrere oder alle Hierarchieebenen 8 einer physikalischen Eigenschaft eines Objekts 4 entsprechen, und/oder eine physikalische Eigenschaft repräsentieren und/oder abbilden, kann ein Status des Systems 100, des Verwaltungssystems 1, und/oder der Waren und/oder Produkte, bereits durch das Industriekoordinatensystem 6 bestimmt und/oder ermittelt sein oder werden. Insbesondere kann eine nachgelagerte Analyse oder Auswertung eines Status des Systems 100, des Verwaltungssystems 1, und/oder der Waren und/ oder Produkte, deutlich beschleunigt sein oder werden, oder sogar auf eine nachgelagerte Analyse oder Auswertung verzichtet sein oder werden. Es kann vorgesehen sein, dass das Industriekoordinatensystem bereits für sich den Status abbildet und/oder repräsentiert.

Es kann vorgesehen sein, dass mindestens eine Industriekoordinate 5 laufend, turnusmäßig und/oder periodisch überwacht, geprüft und/oder verifiziert ist oder wird. Es kann vorgesehen sein, dass mindestens eine Industriekoordinate 5 laufend, turnusmäßig und/oder periodisch aktualisiert ist oder wird. Durch das Aktualisieren kann beispielsweise der tatsächliche Zustand eines Objekts 4 mit dem durch die entsprechende Industriekoordinate 5 abgebildeten und/oder repräsentierten in Übereinstimmung oder Einklang gebracht sein oder werden.

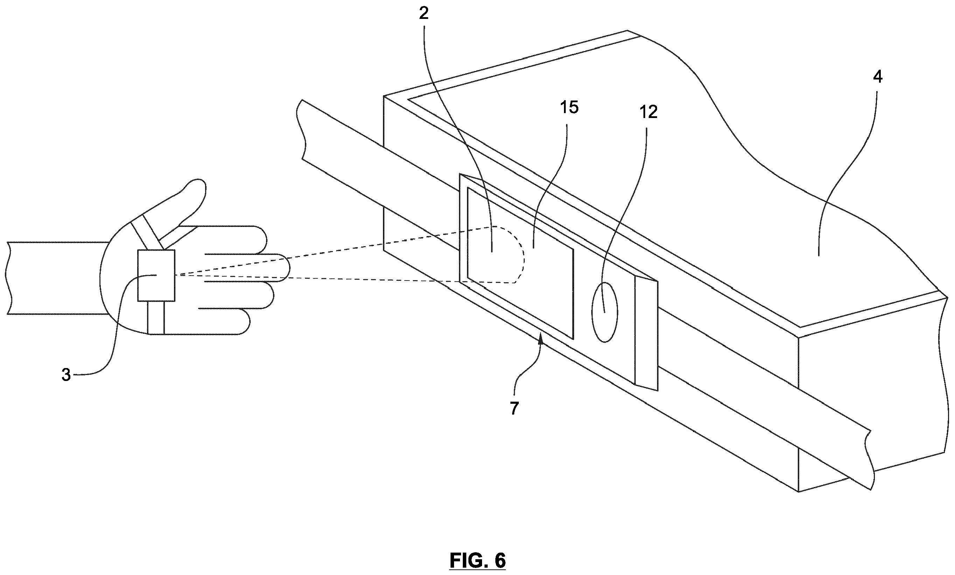

Figur 6 zeigt ein Ausführungsbeispiel eines mobilen Datenerfassungsgeräts 3 und einer Kennung 2. Das mobile Datenerfassungsgerät 3 kann ein Handscanner sein oder aufweisen. Das mobile Datenerfassungsgerät 3 kann ein Funktionshandschuh sein oder aufweisen. Der Funktionshandschuh kann einen Scanner aufweisen. In einigen Ausführungsformen kann das mobile Datenerfassungsgerät 3 ein Smartphone, ein Tablet oder dergleichen sein oder aufweisen.

Das mobile Datenerfassungsgerät 3 kann dazu eingerichtet sein die Kennung 2 zu erfassen und/oder zu scannen. Beim Erfassen und/oder Scannen der Kennung 2 können in der Kennung 2 hinterlegte und/oder codierte Informationen ausgelesen sein oder werden.

Die Kennung 2 kann beispielsweise ein QR-Code, ein Barcode, ein alphanumerische Code, ein Piktogramm oder dergleichen sein oder aufweisen.

In einigen Ausführungsformen kann die Kennung 2 ein elektronisches Etikett 7 sein oder aufweisen. In einigen Ausführungsformen kann ein elektronisches Etikett 7 die Kennung 2 darstellen, anzeigen und/oder abbilden. Das elektronische Etikett 7 kann ein Display 15 aufweisen. Das Display 15 kann ein e-ink Display sein oder aufweisen. Das elektronische Etikett 7 kann eine Leuchteinheit 12 aufweisen. Die Leuchteinheit 12 kann eine LED sein oder aufweisen. Alternativ oder zusätzlich kann die Kennung 2 ein Tablet oder dergleichen sein oder umfassen, und/oder von einem Tablet oder dergleichen angezeigt sein oder werden.

Ein Objekt 4 kann der Kennung 2 zugeordnet sein. Beispielsweise kann eine oder die Industriekoordinate 5 des Objekts 4 mit der Kennung 2 verknüpft und/oder zugeordnet sein. In einigen Ausführungsformen kann die Industriekoordinate 5 des Objekts 4 als Information, oder als Teil einer Information, in der Kennung 2 hinterlegt und/oder codiert sein.

Ein oder das erfindungsgemäße Verfahren kann zunächst ein Erfassen der Kennung 2 mit dem mobilen Datenerfassungsgerät 3 umfassen. Das mobile Datenerfassungsgerät 3 kann in der Kennung 2 hinterlegte Informationen erfassen. Die Informationen können anschließend an das mit dem mobilen Datenerfassungsgerät 3 zum Datenaustausch verbundenes Verwaltungssystem 1 übermittelt werden. Das Verwaltungssystem 3 kann mindestens ein Objekt 4 einer Mehrzahl Objekte 4 identifizieren. Jedem Objekt 4 kann eine eindeutige Industriekoordinate 6 des Industriekoordinatensystems 6 zugeordnet sein. Bei dem Identifizieren kann die eindeutigen Industriekoordinate 5 des zu identifizierenden Objekts 4 anhand der übermittelten Informationen bestimmt werden. Beispielsweise können die übermittelten Informationen zumindest teilweise mit den jeweiligen Objekten 4 eindeutig zugeordneten Industriekoordinaten 5 des Industriekoordinatensystems 6 abgeglichen werden.

Das Verwaltungssystem 1 kann eine Anweisung in Abhängigkeit des identifizierten Objekts 4, dessen Industriekoordinaten 5 und/oder der übermittelten Informationen erstellen. Die Anweisung kann von dem Verwaltungssystem 1 an das mobile Datenerfassungsgerät 3, das identifizierte Objekt 4 und/oder an ein mit dem Verwaltungssystem 1 zum Datenaustausch verbundenes externes Gerät, z.B. externes Gerät 103, übermittelt werden.

Das erfindungsgemäße Verfahren kann beispielsweise zur Verwaltung eines Lagersystem, eines Warensystems und/oder eines Produktionssystems geeignet und/oder eingerichtet sein, und/oder verwendet werden.

Es kann vorgesehen sein, dass die erfassten und/üder übermittelten Informationen eine oder mehrere Steuerbefehle, Anweisungen und/oder Mitteilungen an das Verwaltungssystem umfassen.

In einigen Ausführungsformen können bei dem Übermitteln der Informationen Hilfsinformationen übermittelt werden. Die Hilfsinformationen können beispielsweise beim Erfassen der Informationen erfasst und/oder bestimmt sein oder werden. Die Hilfsinformationen können beispielsweise eine physikalische Eigenschaft eines Objekts 4 umfassen und/oder abbilden. Alternativ oder zusätzlich können die Hilfsinformationen beispielsweise einen Standort und/oder eine Position der Kennung 2, eines Objekts 4 und/oder des mobilen Datenerfassungsgerät 3 umfassen. Beim Identifizieren des Objekts 4 kann das Identifizieren, bevorzugt ein oder das Abgleichen, unter Berücksichtigung der Hilfsinformationen erfolgen. Durch die Hilfsinformationen kann das identifizieren des Objekts 4 erleichtert sein und/oder werden. Beispielsweise kann anhand und/oder basierend auf der Hilfsinformationen ein Identifizieren, Suchen und/oder Eingrenzen einer oder mehrere Industriekoordinaten 5 des Industriekoordinatensystems 6 erleichtert und/oder beschleunigt sein oder werden.

In einigen Ausführungsformen kann vorgesehen sein, dass der Benutzer und/oder Bediener Hilfsinformationen in oder mit dem mobilen Datenerfassungsgerät 3 eingeben, ermitteln und/oder bestimmen kann. Beispielsweise kann eine oder die App zur Eingabe der Hilfsinformationen dienen. Beispielsweise kann das mobile Datenerfassungsgerät 3 dazu eingerichtet sein, einige, mehrere oder alle Hilfsinformationen automatisch zu ermitteln, beispielsweise über geeignete Sensoren. Beispielsweise kann das mobile Datenerfassungsgerät 3 einen Positionssensor aufweisen.

In einigen Ausführungsformen kann ein oder das Verfahren zur Kommissionierung von Waren geeignet und/oder verwendet sein oder werden, beispielsweise für ein "pick-to-light" Verfahren.

Es kann vorgesehen sein, dass die Kennung 2 ein Auftragsschein ist oder aufweist. Der Auftragsschein kann Informationen bezüglich einer oder mehrerer zu kommissionierende Waren umfassen. Diese können beim Erfassen der Kennung 2, beispielsweise durch Scannen, ausgelesen und/oder erfasst sein oder werden.

Die Ware kann eine Komponente, ein Ausgangsstoff, ein Zwischenprodukt, ein Bauteil, ein Halbzeug, ein Ersatzteil, ein fertiges Produkt, und/oder dergleichen sein oder aufweisen.

In einigen Ausführungsformen können die Informationen beispielsweise eine oder mehrere Industriekoordinaten 5 der zu kommissionierenden Ware, und/oder Lagerorte, Anzahl, oder zumindest Merkmale, die zum Identifizieren der zu kommissionierenden Ware, und/oder einem der zu kommissionierenden Ware zugeordneten und/oder entsprechenden elektronischen Etiketts 7 geeignet sind, umfassen.

Bei oder nach dem Übermitteln der Informationen kann das Verwaltungssystem 1 die zu kommissionierende Ware und/oder deren zugeordnete Industriekoordinate 5 bestimmen und/oder ermitteln. In einigen Ausführungsformen kann das Verwaltungssystem 1 alternativ oder zusätzlich einen Behälter und/oder Lagerort der zu kommissionierenden Ware bestimmen und/oder ermitteln. In einigen Ausführungsformen kann das Verwaltungssystem 1 beispielsweise ein elektronisches Etikett 7 identifizieren, und/oder ermitteln. Es kann vorgesehen sein, dass das Verwaltungssystem 1 basierend auf den übermittelten Informationen eine oder die Industriekoordinate 5 eines entsprechenden elektronischen Etiketts 7 identifizieren, bestimmen und/oder ermitteln kann. Das elektronische Etikett 7 kann an oder bei einem Lagerort der zu kommissionierenden Ware angeordnet sein, beispielsweise einem Fach, einem Behälter, einem Lagerregal oder dergleichen. In einigen Ausführungsformen kann das elektronische Etikett 7 auch unmittelbar an der zu kommissionierenden Ware angeordnet sein.

Das Verwaltungssystem 1 kann eine Anweisung erstellen, die das elektronische Etikett 7 beispielsweise anweisen kann, zu leuchten und/oder zu blinken. Die Anweisung kann an das elektronische Etikett 7 übermittelt sein oder werden, so dass das elektronische Etikett 7 nach Erhalt der Anweisung leuchten und/oder blinken kann. Das elektronische Etikett 7 kann beispielsweise eine Leuchteinheit 12, z.B. eine LED oder eine Lampe, aufweisen. Alternativ oder zusätzlich kann, wenn das elektronische Etikett 7 ein Display 15 aufweist, das Display 15 leuchten und/oder blinken.

Die Leuchteinheit 12, z.B. LED, und/oder das elektronische Etikett 7 kann dazu eingerichtet sein, in verschiedenen Farben zu blinken und/oder zu leuchten. Es kann vorgesehen sein, dass Farbe und/oder Frequenz variiert, gewählt und/oder vorgegeben sein kann. Beispielsweise kann die Farbe und/oder die Frequenz in Abhängigkeit von der Industriekoordinate, dem identifizierten Objekt und/oder z.B. einem Ort, beispielsweise ein Behälter, Fach, ein Lagerregal, ein oder dergleichen, aus dem ein Objekt entnommen und/oder abgelegt sein oder werden soll, dem Benutzer, z.B. Benutzeraccount oder dergleichen, einem zu pickenden Objekt oder dergleichen gewählt und/oder vorgegeben sein oder werden. In einigen Ausführungsformen kann die vorgegebene Farbe und/oder Frequenz Teil der von dem Verwaltungssystem 1 übermittelten Anweisung sein.

In einigen Ausführungsformen kann die Farbe und/oder Frequenz derart gewählt, vorgegeben und/oder variiert sein oder werden, dass einem Benutzer, z.B. einem Picker und/oder Lagerarbeiter, Anweisungen, Befehle und/oder Informationen übermittelt werden können, die z.B. auf der Farbe und/oder Frequenz basieren und/oder diesen entsprechen können. In einigen Ausführungsformen kann vorgesehen sein, dass mindestens einem, mehreren oder allen Benutzern, z.B. Pickern und/oder Lagerarbeitern, und/oder Benutzeraccounts eine bestimmte Farbe und/oder Frequenz zugeordnet sein kann. Die Farbe und/oder Frequenz kann benutzerspezifisch, z.B. pickerspezifisch, sein.

In einigen Ausführungsformen kann vorgesehen sein, dass ein Bediener und/oder Benutzer anschließend die zu kommissionierende Ware kommissioniert. Ist die zu kommissionierende Ware beispielsweise in einem Fach, einem Behälter und/oder einem Lagerregal aufbewahrt und/oder angeordnet, so kann der Bediener und/oder der Benutzer die zu kommissionierende Ware entnehmen.

Es kann vorgesehen sein, dass der Bediener und/oder der Benutzer die Kommissionierung, z.B. eine Entnahme, quittieren kann. Beispielsweise kann eine Kennung 2 des elektronischen Etiketts erfasst sein oder werden, und die damit ausgelesen Informationen an das Verwaltungssystem 1 übermittelt sein oder werden.

Das Verwaltungssystem 1 kann anschließend eine oder mehrere Industriekoordinaten 5 anpassen, ändern und/oder löschen. Beispielsweise kann das Verwaltungssystem 1 eine oder mehrere Industriekoordinaten 5 derart anpassen und/oder ändern, dass diese mit den nach der Kommissionierung vorliegenden physikalischen Eigenschaften des Objekts 4, z.B. der kommissionierten Ware und/oder eines Behälters oder Lagerorts, übereinstimmen.

Beispielsweise kann das Verwaltungssystem 1 eine einem Lagerort zugeordnete Industriekoordinate 5 dahingehend ändern, dass die Industriekoordinate 5 eine entsprechend geänderte Anzahl an Waren umfassen kann. Beispielsweise kann das Verwaltungssystem 1 eine der Ware zugeordnete Industriekoordinate 5 dahingehend ändern, dass deren Zustand und/oder Ort mit der kommissionierten Ware übereinstimmen kann.

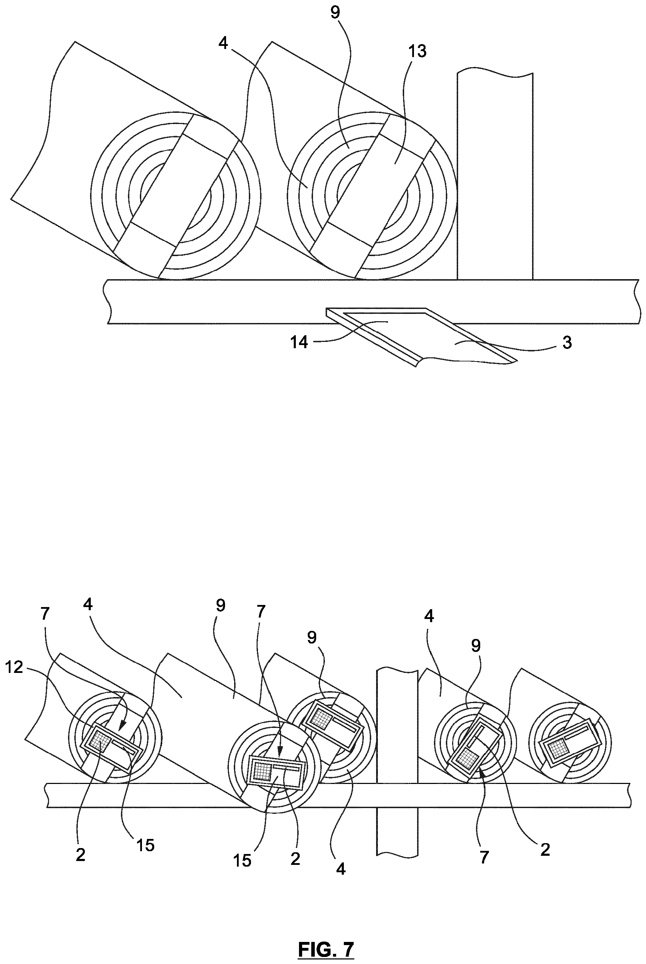

Figur 7 zeigt ein weiteres Ausführungsbeispiel eines mobilen Datenerfassungsgeräts 3 und einer Kennung 2.

In einigen Ausführungsformen kann ein oder das erfindungsgemäße Verfahren zur Lagerung von Waren geeignet und/oder verwendet sein oder werden, beispielsweise für ein "put-to-light" Verfahren.

Ein oder das Verfahren kann zum eine Industriekoordinate 5 zu dem Industriekoordinatensystem 6 zuordnen, und/oder eine neue Industriekoordinate 5 erstellen.

Das Verfahren kann, z.B. zum Zuordnen einer Industriekoordinate 5 zu dem Industriekoordinatensystem 6 und/oder zum Erstellen einer neuen Industriekoordinate 5, ein Erfassen einer Teilekennung 13 einer zu lagernden Ware 9 mit einem oder dem mobilen Datenerfassungsgerät 3 umfassen. Die Teileidentifizierungsdaten der Teilekennung 13 können von dem mobilen Datenerfassungsgerät 3 erfasst werden. Die Teilekennung 13 kann beispielsweise an oder bei der zu lagernden Ware 9 angeordnet und/oder befestigt sein. Alternativ oder zusätzlich kann beispielsweise eine separate Teilekennung 13, beispielsweise eine Liste oder dergleichen, vorgesehen sein.

Die Teileidentifizierungsdaten können an das mit dem mobilen Datenerfassungsgerät 3 zum Datenaustausch verbundene Verwaltungssystem 1 übermittelt werden.

Ein elektronisches Etikett 7 kann mit dem mobilen Datenerfassungsgerät 3 erfasst werden. Dabei können Etikettidentifizierungsdaten des elektronischen Etiketts 7 erfasst werden.

Die Etikettidentifizierungsdaten können an das mit dem mobilen Datenerfassungsgerät 3 zum Datenaustausch verbundene Verwaltungssystem 1 übermittelt werden.

Das Verwaltungssystem 1 kann eine Industriekoordinate 5 erstellen, die dem elektronischen Etikett 7 und/oder der Ware 9 zugeordnet sein kann. Das Erstellen der Industriekoordinate 5 kann anhand der Teileidentifizierungsdaten und/oder der Etikettidentifizierungsdaten erfolgen. Alternativ oder zusätzlich kann eine Industriekoordinate 5 der Ware 9 erstellt werden, die einer Industriekoordinate 5 des elektronischen Etiketts 7, die bereits vorhanden sein kann oder die ebenfalls neu erstellt werden kann, zugeordnet und/oder miteinander verknüpft werden.

Die Teileidentifizierungsdaten können z.B. physikalische Eigenschaften der Ware 9 umfassen. Die in den Teileidentifizierungsdaten hinterlegten, vorhandenen und/oder codierten physikalische Eigenschaften der Ware 9 können zum Erstellen der Industriekoordinate 5 verwendet werden, z.B. der Industriekoordinate 5 der Ware 9.

Alternativ oder zusätzlich können die Teilekennung 13 und/oder die Teileidentifizierungsdaten dazu dienen, die Ware 9 zu identifizieren und/oder zu ermitteln. Es kann auch vorgesehen sein, dass die Teilekennung 13 und/oder die Teileidentifizierungsdaten dazu dienen können, eine Industriekoordinate 5 für die Ware 9 zu erstellen und/oder dem Industriekoordinatensystem 6 hinzuzufügen, und/oder der Ware 9 eine Industriekoordinate 5 zuzuordnen. Beispielsweise können die Teilekennung 13 und/oder die Teileidentifizierungsdaten eine Industriekoordinate 5 einer oder der Ware aufweisen. Alternativ oder zusätzlich kann Teilekennung und/oder die Teileidentifizierungsdaten eine Mitteilung, Anweisung und/oder Steuerbefehl umfassen, anhand der oder dem das Verwaltungssystem 1 die Ware 9 identifizieren und/oder ermitteln kann, eine Industriekoordinate 5 für die Ware 9 anlegen, erstellen und/oder dem Industriekoordinatensystem 6 hinzufügen kann, und/oder anhand der oder dem das Verwaltungssystem 1 eine oder die Anweisung erstellen kann.

Die Etikettidentifizierungsdaten können dazu dienen, ein elektronisches Etikett 7 zu identifizieren und/oder zu ermitteln. Es kann auch vorgesehen sein, dass die Etikettidentifizierungsdaten dazu dienen kann, eine Industriekoordinate 5 für ein oder das elektronische Etikett 7 zu erstellen und/oder dem Industriekoordinatensystem 6 hinzuzufügen, und/oder dem elektronischen Etikett 7 eine Industriekoordinate 5 zuzuordnen. Beispielsweise können die Etikettidentifizierungsdaten eine Industriekoordinate 5 eines elektronischen Etiketts 7 aufweisen. Alternativ oder zusätzlich können die Etikettidentifizierungsdaten eine Mitteilung, Anweisung und/oder Steuerbefehl umfassen, anhand der oder dem das Verwaltungssystem ein oder das elektronische Etikett identifizieren und/oder ermitteln kann, eine Industriekoordinate 5 für das elektronische Etikett 7 anlegen, erstellen und/oder dem Industriekoordinatensystem 6 hinzufügen kann, und/oder anhand der oder dem das Verwaltungssystem 1 eine oder die Anweisung erstellen kann.

Die Erfassung und Übermittlung der Teileidentifizierungsdaten und der Etikettidentifizierungsdaten kann auch in verschiedener Reihenfolge erfolgen. Beispielsweise können zuerst die Etikettidentifizierungsdaten ermittelt und/oder übertragen werden, bevor die Teileidentifizierungsdaten ermittelt und/oder übertragen werden.

In einigen Ausführungsformen kann das elektronische Etikett 7 an oder bei der Ware 9 befestigt und/oder angeordnet sein oder werden.

Es kann vorgesehen sein, dass ein oder der Bediener und/oder Benutzer ein Lagern der Ware 9 quittieren kann. Das Quittieren kann beispielsweise wie vorstehend beschrieben erfolgen.

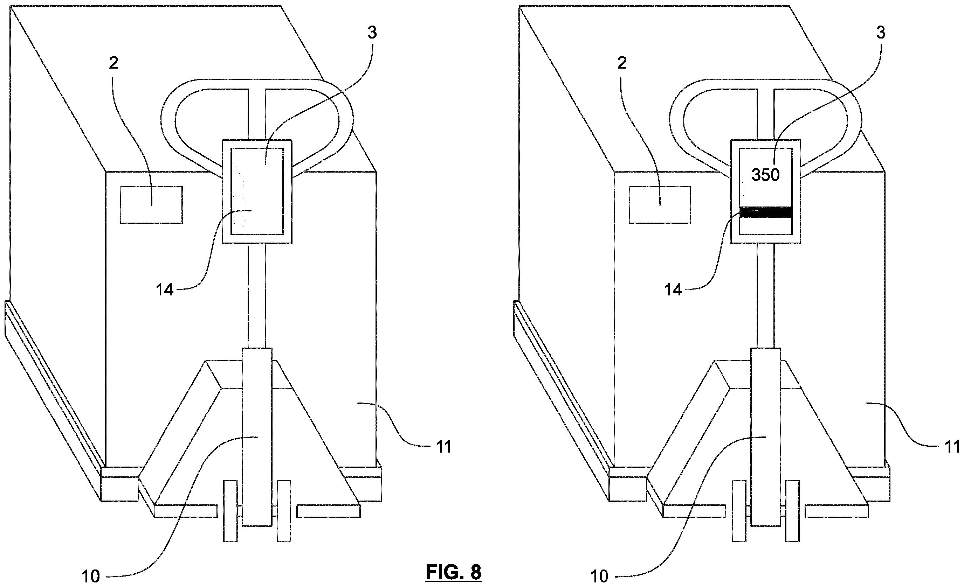

Figur 8 zeigt noch ein weiteres Ausführungsbeispiel eines mobilen Datenerfassungsgerät 3 und einer Kennung 2.

Das mobile Datenerfassungsgerät 3 kann an einer Transporteinheit 10 angeordnet, befestigt und/oder angebracht sein. Die Kennung 2 kann an einem zu transportierenden Gegenstand 11 angeordnet, befestigt und/oder angebracht sein.

Es kann vorgesehen sein, dass das Verwaltungssystem 1 einen eines Lagerorts, Abstellorts und/oder Zielort ermittelt, an den der zu transportierende Gegenstand 11 transportiert und/oder überführt werden soll. Das Verwaltungssystem 1 kann eine Anweisung erstellen, die den ermittelten Lagerort, Abstellort und/oder Zielort umfassen kann. Die Anweisung kann an das mobile Datenerfassungsgerät 3 kommuniziert sein oder werden. Beispielsweise kann das mobile Datenerfassungsgerät 3 nach Erhalt der Anweisung den Lagerort, Abstellort und/oder Zielort anzeigen, z.B. auf einem Display 14 (vgl. z.B. Fig. 8 rechts).

Es kann vorgesehen sein, dass die Industriekoordinate 5 des zu transportierenden Gegenstands 11, und/oder der Transporteinheit 10, deren jeweilige Position umfassen kann. Beispielsweise kann ein Bestandteil der jeweiligen Industriekoordinate 5 die jeweilige Position abbilden und/oder repräsentieren. In einigen Ausführungsformen kann das Verwaltungssystem 1 die entsprechende Industriekoordinate 5 und/oder deren entsprechender Bestandteil, ändern und/oder aktualisieren. Beispielsweise kann das Verwaltungssystem 1 die entsprechende Industriekoordinate 5 und/oder deren entsprechenden Bestandteil derart ändern und/oder aktualisieren, dass dieser der Position des Gegenstands 11, und/oder der Transporteinheit 10 entspricht, beispielsweise wenn diese an oder zu dem Lagerort, Abstellort und/oder Zielort transportiert worden ist. In einigen Ausführungsformen kann entsprechende Industriekoordinate 5 und/oder der entsprechende Bestandteil zunächst einen Bereitstellungsort des zu transportierenden Gegenstands 11 und/oder der Transporteinheit 13 vor dem Transport umfassen, und nach dem Transportieren des Gegenstands 11 den Lagerort, Abstellort und/oder Zielort umfassen.

In einigen Ausführungsformen kann der Benutzer und/oder Bediener beispielsweise nach dem Transportieren des Gegenstands 11 über das mobile Datenerfassungsgerät 3 dem Verwaltungssystem 1 die neue Position des Gegenstands 11 mitteilen. In einigen Ausführungsformen kann alternativ oder zusätzlich das mobile Datenerfassungsgerät 3 automatisch und/oder selbstständig erkennen, dass der Gegenstand seine Zielposition bzw. den Lagerort, Abstellort und/oder Zielort erreicht hat. Das mobile Datenerfassungsgerät 3 kann dem Verwaltungssystem 1 die neue Position des Gegenstands 11 übermitteln, und/oder dazu eingerichtet sein.

Die in den Ansprüchen, der Beschreibung und den Figuren offenbarten Merkmale können einzeln oder in beliebiger Kombination für die Verwirklichung der Erfindung wesentlich sein.

**Bezugszeichenliste**

| | |
|---|---|
| Verwaltungssystem | 1 |
| Kennung | 2 |
| mobiles Datenerfassungsgerät | 3 |
| Objekt | 4 |
| Industriekoordinate | 5 |
| Industriekoordinatensystem | 6 |
| elektronisches Etikett | 7 |
| Hierarchieebene | 8 |
| Ware | 9 |
| Transporteinheit | 10 |
| zu transportierender Gegenstand | 11 |
| Leuchteinheit | 12 |
| Teilekennung | 13 |
| Display | 14 |
| Display | 15 |
| System | 100 |
| Server | 101 |
| Datenbank | 102 |
| externes Gerät | 103 |
| Kommunikationseinheit | 104 |
| Komponente | 105 |

## Patentansprüche

1. Verfahren zum Verwalten eines Lagersystem, eines Warensystems und/oder eines Produktionssystems, umfassend die Schritte:
- Erfassen einer Kennung (2) mit einem mobilen Datenerfassungsgerät (3), wobei das mobile Datenerfassungsgerät (3) in der Kennung (2) hinterlegte Informationen erfasst;
- Übermitteln der Informationen an ein mit dem mobilen Datenerfassungsgerät (3) zum Datenaustausch verbundenes Verwaltungssystem (1);
- Identifizieren mindestens eines Objekts (4) einer Mehrzahl Objekte durch das Verwaltungssystem (1), wobei jedem Objekt (4) eine eindeutige Industriekoordinate (5) eines Industriekoordinatensystem (6) zugeordnet ist und bei dem Identifizieren die eindeutigen Industriekoordinaten (5) des zu identifizierenden Objekts (4) anhand der übermittelten Informationen bestimmt wird, bevorzugt die übermittelten Informationen zumindest teilweise mit den jeweiligen Objekten (4) eindeutig zugeordneten Industriekoordinaten (5) des Industriekoordinatensystems (6) abgeglichen werden;
- Erstellen einer Anweisung in Abhängigkeit des identifizierten Objekts (4), dessen Industriekoordinaten (5) und/oder der übermittelten Informationen, und übermitteln der Anweisung von dem Verwaltungssystem (1) an das mobile Datenerfassungsgerät (3), das identifizierte Objekt (4) und/oder an ein mit dem Verwaltungssystem (1) zum Datenaustausch verbundenes externes Gerät;
wobei die Industriekoordinaten (5) mindestens eine Hierarchieebene (8) umfassen und mindestens eine, mehrere oder alle Hierarchieebenen (8) einer physikalischen Eigenschaft, bevorzugt eines Aufstellungsorts, eines Lagerorts, eines Betriebsmodus, eines Takts, eines Maschinentyps, eines Erzeugnisses und/oder Herstellungsinformationen, des der jeweiligen Industriekoordinate (5) zugeordneten Objekts (4) entsprechen, wobei bevorzugt das Industriekoordinatensystem (6) die Industriekoordinaten (5) in einer baumförmigen Struktur strukturiert.

2. Verfahren nach Anspruch 1, bei dem die Kennung (2) von einem Handscanner oder von einem Funktionshandschuh erfasst wird.

3. Verfahren nach einem der vorangegangenen Ansprüche, bei dem beim Übermitteln der Informationen Hilfsinformationen übermittelt werden, bevorzugt ein Standort oder eine Position, und beim Identifizieren des Objekts (4) das Identifizieren, bevorzugt ein oder das Abgleichen, unter Berücksichtigung der Hilfsinformationen erfolgt.

4. Verfahren nach einem der vorangegangenen Ansprüche, bei dem das Verfahren bevorzugt zur Kommissionierung von Waren mittels Pick-by-Light einsetzbar ist, wobei:
- beim Erfassen der Kennung (2) ein Auftragsschein erfasst wird, bevorzugt gescannt wird, der eine oder mehrere zu kommissionierende Waren umfasst, wobei bevorzugt jeweils eine Industriekoordinate (5) der jeweiligen zu kommissionierenden Ware (9) und/oder bevorzugt jeweils eine Industriekoordinate (5) eines jeweiligen, der zu kommissionierenden Ware (9) zugeordneten elektronischen Etiketts (7) erfasst wird;
- bei dem Identifizieren ein an oder bei den zu kommissionierenden Waren angeordnetes elektronisches Etikett (7) als zu identifizierendes Objekt (4) identifiziert wird;
- beim Erstellen der Anweisung eine Anweisung, die das identifizierte elektronische Etikett (7) anweist, zu leuchten und/oder zu blinken, erstellt wird, und die Anweisung an das identifizierte elektronische Etikette übermittelt wird, wobei das identifizierte elektronische Etikett (7) nach dem Übermitteln leuchtet und/oder blinkt.

5. Verfahren nach einem der vorangegangenen Ansprüche, bei dem das Verfahren bevorzugt zur Lagerung mittels Put-to-Light einsetzbar ist, wobei mindestens eine Industriekoordinate (5) dem Industriekoordinatensystems (6) nach einem Verfahren umfassend die folgenden Schritte zugeordnet ist oder wird:
- Erfassen einer Teilekennung (13) einer zu lagernden Ware (9), bevorzugt einer an oder bei der zu lagernden Ware (9) angeordneten Teilekennung (13), mit einem oder dem mobilen Datenerfassungsgerät (3), wobei Teileidentifizierungsdaten der Teilekennung (13) erfasst werden;
- Übermitteln der Teileidentifizierungsdaten an das mit dem mobilen Datenerfassungsgerät (3) zum Datenaustausch verbundene Verwaltungssystem (1);
- Erfassen eines elektronischen Etiketts (7) mit dem mobilen Datenerfassungsgerät (3), wobei Etikettidentifizierungsdaten des elektronischen Etiketts (7) erfasst werden;
- Übermitteln der Etikettidentifizierungsdaten an das mit dem mobilen Datenerfassungsgerät (3) zum Datenaustausch verbundene Verwaltungssystem (1);
- Erstellen einer Industriekoordinate (5), die dem elektronischen Etikett (7) und/oder der Ware (9) zugeordnet ist, mit dem Verwaltungssystem (1).

6. Verfahren nach Anspruch 5, bei dem nach dem Erstellen der Industriekoordinate (5) eine Anweisung von dem Verwaltungssystem (1) an das elektronische Etikett (7) übermittelt wird, die das elektronische Etikett (7) anweist, zu leuchten und/oder zu blinken, und nach dem Übermitteln der Anweisung das elektronische Etikett (7) leuchtet und/oder blinkt.

7. Verfahren nach Anspruch 5 oder 6, bei dem das elektronische Etikett (7) an der Ware (9) befestigt wird.

8. Verfahren nach einem der vorangegangenen Ansprüche 4 bis 7, bei dem das elektronische Etikett (7) gescannt wird, und das mobile Datenerfassungsgerät (3) eine Quittierung an das Verwaltungssystem (1) übermittelt.

9. Verfahren nach Anspruch 8, bei dem das Verwaltungssystem (1) nach dem Übermitteln der Quittierung eine mit der Quittierung verknüpfte Industriekoordinate (5) ändert oder löscht, und/oder eine Industriekoordinate (5) neu anlegt und mit der Quittierung verknüpft.

10. Verfahren nach einem der vorangegangenen Ansprüche, bei dem:
- beim Erfassen der Kennung (2) das mobile Datenerfassungsgerät (3) die Identifizierungsdaten drahtlos erfasst, wobei die Identifizierungsdaten durch das mobile Datenerfassungsgerät (3) automatisch erfasst werden, wenn ein Abstand zwischen Kennung (2) und mobilem Datenerfassungsabstand geringer als ein Mindestabstand ist.

11. Verfahren nach einem der vorangegangenen Ansprüche, bei dem das mobile Datenerfassungsgerät (3) an einer Transporteinheit (10) und die Kennung (2) an einem zu transportierenden Gegenstand angebracht ist, und wobei das Erstellen der Anweisung ein Ermitteln eines Lagerorts, Abstellorts und/oder Zielorts des zu transportierenden Gegenstands umfasst.

12. Verfahren nach Anspruch 11, bei dem die dem zu transportierenden Gegenstand zugeordnete Industriekoordinate (5) vor dem Erfassen der Kennung (2), dem Übermitteln der Informationen und/oder dem Bestimmen der Anweisung den Lagerort, Abstellort und/oder Zielort nicht umfasst, und wobei das Verwaltungssystem (1) die mit dem Gegenstand verknüpfte Industriekoordinate (5) nach dem Erfassen der Kennung (2) und/oder dem Übermitteln der Informationen und/oder dem Bestimmen der Anweisung derart ändert, dass diese den Lagerort, Abstellort und/oder Zielort umfasst.

13. System (100), umfassend ein mobiles Datenerfassungsgerät (3), ein Verwaltungssystem (1), und eine Mehrzahl Objekte, wobei jedem Objekt (4) eine Industriekoordinate (5) zugeordnet ist, die mit einem Industriekoordinatensystem (6) strukturiert sind, wobei die Industriekoordinaten (5) mindestens eine Hierarchieebene (8) umfassen und mindestens eine, mehrere oder alle Hierarchieebenen (8) einer physikalischen Eigenschaft, bevorzugt eines Aufstellungsorts, eines Lagerorts, eines Betriebsmodus, eines Takts, eines Maschinentyps, eines Erzeugnisses und/oder Herstellungsinformationen, des der jeweiligen Industriekoordinate (5) zugeordneten Objekts (4) entsprechen, wobei das System (100) dazu eingerichtet ist, das Verfahren nach einem der vorangegangenen Ansprüche 1 bis 12 durchzuführen.

14. System (100) nach Anspruch 13, wobei mindestens zwei, mehrere oder alle der Industriekoordinaten (5) mindestens eine gemeinsame Hierarchieebene haben.

15. System (100) nach Anspruch 13 oder 14, wobei mindestens zwei, mehrere oder alle der Industriekoordinaten (5) die gleiche Anzahl Hierarchieebenen (8) haben.

## Geänderte Patentansprüche

### Geänderte Patentansprüche gemäss Regel 137(2) EPÜ.

1. Verfahren zum Verwalten eines Lagersystem, eines Warensystems und/oder eines Produktionssystems, umfassend die Schritte:
- Erfassen einer Kennung (2) mit einem mobilen Datenerfassungsgerät (3), wobei das mobile Datenerfassungsgerät (3) in der Kennung (2) hinterlegte Informationen erfasst, wobei eine Industriekoordinate (5) eines Objekts (4) als Information in der Kennung (2) hinterlegt und/oder codiert ist;
- Übermitteln der Informationen an ein mit dem mobilen Datenerfassungsgerät (3) zum Datenaustausch verbundenes Verwaltungssystem (1);
- Identifizieren des Objekts (4) einer Mehrzahl Objekte durch das Verwaltungssystem (1), wobei jedem Objekt (4) eine eindeutige Industriekoordinate (5) eines Industriekoordinatensystem (6) zugeordnet ist und bei dem Identifizieren die eindeutigen Industriekoordinaten (5) des zu identifizierenden Objekts (4) anhand der übermittelten Informationen bestimmt wird, bevorzugt die übermittelten Informationen zumindest teilweise mit den jeweiligen Objekten (4) eindeutig zugeordneten Industriekoordinaten (5) des Industriekoordinatensystems (6) abgeglichen werden;
- Erstellen einer Anweisung in Abhängigkeit des identifizierten Objekts (4), dessen Industriekoordinaten (5) und/oder der übermittelten Informationen, und übermitteln der Anweisung von dem Verwaltungssystem (1) an das mobile Datenerfassungsgerät (3), das identifizierte Objekt (4) und/oder an ein mit dem Verwaltungssystem (1) zum Datenaustausch verbundenes externes Gerät;
wobei die Industriekoordinaten (5) mindestens eine Hierarchieebene (8) umfassen und mindestens eine, mehrere oder alle Hierarchieebenen (8) einer physikalischen Eigenschaft, bevorzugt eines Aufstellungsorts, eines Lagerorts, eines Betriebsmodus, eines Takts, eines Maschinentyps, eines Erzeugnisses und/oder Herstellungsinformationen, des der jeweiligen Industriekoordinate (5) zugeordneten Objekts (4) entsprechen, wobei bevorzugt das Industriekoordinatensystem (6) die Industriekoordinaten (5) in einer baumförmigen Struktur strukturiert.

2. Verfahren nach Anspruch 1, bei dem die Kennung (2) von einem Handscanner oder von einem Funktionshandschuh erfasst wird.

3. Verfahren nach einem der vorangegangenen Ansprüche, bei dem beim Übermitteln der Informationen Hilfsinformationen übermittelt werden, bevorzugt ein Standort oder eine Position, und beim Identifizieren des Objekts (4) das Identifizieren, bevorzugt ein oder das Abgleichen, unter Berücksichtigung der Hilfsinformationen erfolgt.

4. Verfahren nach einem der vorangegangenen Ansprüche, bei dem das Verfahren bevorzugt zur Kommissionierung von Waren mittels Pick-by-Light einsetzbar ist, wobei:
- beim Erfassen der Kennung (2) ein Auftragsschein erfasst wird, bevorzugt gescannt wird, der eine oder mehrere zu kommissionierende Waren umfasst, wobei bevorzugt jeweils eine Industriekoordinate (5) der jeweiligen zu kommissionierenden Ware (9) und/oder bevorzugt jeweils eine Industriekoordinate (5) eines jeweiligen, der zu kommissionierenden Ware (9) zugeordneten elektronischen Etiketts (7) erfasst wird;
- bei dem Identifizieren ein an oder bei den zu kommissionierenden Waren angeordnetes elektronisches Etikett (7) als zu identifizierendes Objekt (4) identifiziert wird;
- beim Erstellen der Anweisung eine Anweisung, die das identifizierte elektronische Etikett (7) anweist, zu leuchten und/oder zu blinken, erstellt wird, und die Anweisung an das identifizierte elektronische Etikette übermittelt wird, wobei das identifizierte elektronische Etikett (7) nach dem Übermitteln leuchtet und/oder blinkt.

5. Verfahren nach einem der vorangegangenen Ansprüche, bei dem das Verfahren bevorzugt zur Lagerung mittels Put-to-Light einsetzbar ist, wobei mindestens eine Industriekoordinate (5) dem Industriekoordinatensystems (6) nach einem Verfahren umfassend die folgenden Schritte zugeordnet ist oder wird:
- Erfassen einer Teilekennung (13) einer zu lagernden Ware (9), bevorzugt einer an oder bei der zu lagernden Ware (9) angeordneten Teilekennung (13), mit einem oder dem mobilen Datenerfassungsgerät (3), wobei Teileidentifizierungsdaten der Teilekennung (13) erfasst werden;
- Übermitteln der Teileidentifizierungsdaten an das mit dem mobilen Datenerfassungsgerät (3) zum Datenaustausch verbundene Verwaltungssystem (1);
- Erfassen eines elektronischen Etiketts (7) mit dem mobilen Datenerfassungsgerät (3), wobei Etikettidentifizierungsdaten des elektronischen Etiketts (7) erfasst werden;
- Übermitteln der Etikettidentifizierungsdaten an das mit dem mobilen Datenerfassungsgerät (3) zum Datenaustausch verbundene Verwaltungssystem (1);
- Erstellen einer Industriekoordinate (5), die dem elektronischen Etikett (7) und/oder der Ware (9) zugeordnet ist, mit dem Verwaltungssystem (1).

6. Verfahren nach Anspruch 5, bei dem nach dem Erstellen der Industriekoordinate (5) eine Anweisung von dem Verwaltungssystem (1) an das elektronische Etikett (7) übermittelt wird, die das elektronische Etikett (7) anweist, zu leuchten und/oder zu blinken, und nach dem Übermitteln der Anweisung das elektronische Etikett (7) leuchtet und/oder blinkt.

7. Verfahren nach Anspruch 5 oder 6, bei dem das elektronische Etikett (7) an der Ware (9) befestigt wird.

8. Verfahren nach einem der vorangegangenen Ansprüche 4 bis 7, bei dem das elektronische Etikett (7) gescannt wird, und das mobile Datenerfassungsgerät (3) eine Quittierung an das Verwaltungssystem (1) übermittelt.

9. Verfahren nach Anspruch 8, bei dem das Verwaltungssystem (1) nach dem Übermitteln der Quittierung eine mit der Quittierung verknüpfte Industriekoordinate (5) ändert oder löscht, und/oder eine Industriekoordinate (5) neu anlegt und mit der Quittierung verknüpft.

10. Verfahren nach einem der vorangegangenen Ansprüche, bei dem:
- beim Erfassen der Kennung (2) das mobile Datenerfassungsgerät (3) die Identifizierungsdaten drahtlos erfasst, wobei die Identifizierungsdaten durch das mobile Datenerfassungsgerät (3) automatisch erfasst werden, wenn ein Abstand zwischen Kennung (2) und mobilem Datenerfassungsabstand geringer als ein Mindestabstand ist.

11. Verfahren nach einem der vorangegangenen Ansprüche, bei dem das mobile Datenerfassungsgerät (3) an einer Transporteinheit (10) und die Kennung (2) an einem zu transportierenden Gegenstand angebracht ist, und wobei das Erstellen der Anweisung ein Ermitteln eines Lagerorts, Abstellorts und/oder Zielorts des zu transportierenden Gegenstands umfasst.

12. Verfahren nach Anspruch 11, bei dem die dem zu transportierenden Gegenstand zugeordnete Industriekoordinate (5) vor dem Erfassen der Kennung (2), dem Übermitteln der Informationen und/oder dem Bestimmen der Anweisung den Lagerort, Abstellort und/oder Zielort nicht umfasst, und wobei das Verwaltungssystem (1) die mit dem Gegenstand verknüpfte Industriekoordinate (5) nach dem Erfassen der Kennung (2) und/oder dem Übermitteln der Informationen und/oder dem Bestimmen der Anweisung derart ändert, dass diese den Lagerort, Abstellort und/oder Zielort umfasst.

13. System (100), umfassend ein mobiles Datenerfassungsgerät (3), ein Verwaltungssystem (1), und eine Mehrzahl Objekte, wobei jedem Objekt (4) eine Industriekoordinate (5) zugeordnet ist, die mit einem Industriekoordinatensystem (6) strukturiert sind, wobei die Industriekoordinaten (5) mindestens eine Hierarchieebene (8) umfassen und mindestens eine, mehrere oder alle Hierarchieebenen (8) einer physikalischen Eigenschaft, bevorzugt eines Aufstellungsorts, eines Lagerorts, eines Betriebsmodus, eines Takts, eines Maschinentyps, eines Erzeugnisses und/oder Herstellungsinformationen, des der jeweiligen Industriekoordinate (5) zugeordneten Objekts (4) entsprechen, wobei das System (100) dazu eingerichtet ist, das Verfahren nach einem der vorangegangenen Ansprüche 1 bis 12 durchzuführen.

14. System (100) nach Anspruch 13, wobei mindestens zwei, mehrere oder alle der Industriekoordinaten (5) mindestens eine gemeinsame Hierarchieebene haben.

15. System (100) nach Anspruch 13 oder 14, wobei mindestens zwei, mehrere oder alle der Industriekoordinaten (5) die gleiche Anzahl Hierarchieebenen (8) haben.
